(19) Europäisches Patentamt / European Patent Office / Office européen des brevets

(11) **EP 2 619 547 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **11760701.0**

(22) Anmeldetag: **09.09.2011**

(51) Int Cl.:
*G01N 21/21* *(2006.01)*      *G01N 21/85* *(2006.01)*

(86) Internationale Anmeldenummer:
**PCT/EP2011/004553**

(87) Internationale Veröffentlichungsnummer:
**WO 2012/038036 (29.03.2012 Gazette 2012/13)**

(54) **VORRICHTUNG UND VERFAHREN ZUR OPTISCHEN CHARAKTERISIERUNG VON MATERIALIEN**

APPARATUS AND METHOD FOR OPTICALLY CHARACTERIZING MATERIALS

DISPOSITIF ET PROCÉDÉ DE CARACTÉRISATION OPTIQUE DE MATÉRIAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2010 DE 102010046438**

(43) Veröffentlichungstag der Anmeldung:
**31.07.2013 Patentblatt 2013/31**

(60) Teilanmeldung:
**14192072.8 / 2 848 916**

(73) Patentinhaber: **Fraunhofer-Gesellschaft zur Förderung der angewandten Forschung e.V.**
**80686 München (DE)**

(72) Erfinder: **HARTRUMPF, Matthias**
**76187 Karlsruhe (DE)**

(74) Vertreter: **Pfenning, Meinig & Partner mbB Patent- und Rechtsanwälte**
**Theresienhöhe 11a**
**80339 München (DE)**

(56) Entgegenhaltungen:
EP-A1- 1 619 465     WO-A1-2009/030004
WO-A1-2009/064626     AT-B- 380 814
DE-A1- 4 317 513     DE-A1-102007 062 052
US-A- 5 311 285     US-A1- 2004 017 561
US-A1- 2010 012 031     US-B1- 7 768 643

• **CHRISTIAN NEGARA ET AL: "Ellipsometrie an gekrümmten Oberflächen", FORUM BILDVERARBEITUNG 2014, 31 December 2014 (2014-12-31), pages 227-238, XP055281546, Karlsruhe DOI: 10.5445/KSP/1000043608 ISBN: 978-3-7315-0284-5**

**Beschreibung**

Die vorliegende Erfindung bezieht sich auf eine Vorrichtung und ein Verfahren zur optischen Charakterisierung einer Probe und/oder des Materials (bzw. der Materialien) derselben. Die Charakterisierung erfolgt dabei auf Basis der Auswertung der Polarisation von Licht, das auf die Probe eingestrahlt und von der Probe zurückgeworfen wird. Die Vorrichtung und das Verfahren können insbesondere für die Oberflächeninspektion oder auch für die Sortierung von Schüttgut durch die Auswertung der Polarisation des zurückgeworfenen Lichts eingesetzt werden.

Die US 7,768,643 B1 beschreibt: Eine Vorrichtung zum Klassifizieren von Artikeln. Diese kann einen Rahmen enthalten, der mit einem Transportmittel verbunden ist. Ein Produktstrom wird erzeugt. Es gibt einen Emitterabschnitt mit einer Strahlungsquelle und einen Erfassungsabschnitt zum Erfassen eines Teils der Strahlung durch reflektierte Artikel. Der Erfassungsabschnitt kann eine erste Erfassungseinrichtung zum Umwandeln von Strahlungsenergie der reflektierten Strahlung mit einem ersten Polarisationszustand in ein erstes elektrisches Signal, eine zweite Erfassungseinrichtung zum Umwandeln von Strahlungsleistung der reflektierten Strahlung mit einem zweiten Polarisationszustand in ein zweites elektrisches Signal und eine dritte Erfassungseinrichtung zum Umwandeln von Strahlungsleistung der reflektierten Strahlung in ein drittes elektrisches Signal haben.

Die US 5,311,285 A beschreibt: Beweglich in einem Ellipsometer enthalten optische Teile werden entfernt, um die Messgeschwindigkeit zu erhöhen. Ein spezifischer Quadrant, dem eine Phasendifferenz DELTA als ellipsometrischer Parameter gehört, ist durch einen Messvorgang bestimmt. Ein Strahl wird von einem Lichtquellenabschnitt auf ein Messziel abgestrahlt. Der reflektierte Strahl mit einem elliptisch polarisierten Strahl, der von dem Ziel reflektiert wird, ist in vier polarisierte Lichtkomponenten aufgeteilt. Die optischen Intensitäten der jeweiligen Lichtkomponenten werden erfasst. Ellipsometrische Parameter PSI und DELTA werden auf der Grundlage der erfassen vier optischen Intensitäten berechnet.

Die EP 1 619 465 A1 beschreibt: Ein Strahl wird reflektiert und/oder transmittiert durch eine Probe mit einer Beschichtung. Der Weg des Strahls hat einen einheitlichen Pfadteil, wo der Strahl durch die Beschichtung beeinträchtigt ist, aber in einem probeunabhängigen Teil der Vorrichtung in parallele Teilbahnen geteilt wird, wobei Komponenten des Strahls mit unterschiedlichen Polarisationsrichtungen die Teilpfade durchlaufen.

Die US 2004/0017561 A beschreibt: Kratzer, Vertiefungen und Teilchen, die kleiner oder größer als die Strahlgröße sind, können gemessen und durch Einzel- und Mehrfachstrahl-Techniken identifiziert werden. In einer Ausführungsform wird ein Paar von orthogonal ausgerichteten Laserstrahlen verwendet, einer in radialer und in einer in der Umfangsrichtung. In einer anderen Ausführungsform werden zwei Paare von orthogonal orientierten Laserstrahlen verwendet. Das Streulicht von Radial- und Umfangsstrahlen ermöglicht die Erkennung und Klassifizierung von Partikeln, Gruben und Kratzern.

Aus dem Stand der Technik sind auch bereits Verfahren zur optischen Charakterisierung von Proben auf Basis der Reflektometrie oder der Ellipsometrie bekannt. Siehe beispielsweise Thomas Geiler "Polarisationsbildgebung in der industriellen Qualitätskontrolle", VDM Verlag, August 2008. Auch sind aus dem Stand der Technik Vorrichtungen zur Klassifikation von Proben in Form von Schüttgut bekannt (WO 2009/049594 A), die auf Basis von an einem Retroreflektor, der polarisationsselektiv sein kann, reflektierten und hinsichtlich seiner unterschiedlichen Polarisationsanteile erfassten Licht arbeiten.

All diese Realisierungen setzen jedoch entweder eine ebene Oberfläche der Prüflinge voraus oder es wird eine zeitaufwändige, gleichzeitige Variation des Einfalls- und des Ausfallswinkels durchgeführt. Oft wird zusätzlich noch eine Variation der Polarisation der Beleuchtung durchgeführt.

Aufgabe der vorliegenden Erfindung ist es, Vorrichtungen und Verfahren zur optischen Charakterisierung von Proben, insbesondere auf der Technik der Reflektometrie oder der Ellipsometrie bzw. Polarimetrie basierende Vorrichtungen (und entsprechende Verfahren) so weiterzubilden, dass die Proben (insbesondere auch nicht ebene Proben oder Prüflinge z.B. in Form von Schüttgütern) einfach und zuverlässig hinsichtlich ihres/ihrer Materials/ien charakterisiert werden können. Aufgabe ist es insbesondere auch, die Vorrichtungen und die entsprechenden Verfahren so auszubilden, dass diese Charakterisierung schnell (im Bereich von einigen 1/10 Sekunden bis einigen wenigen Sekunden), also schritthaltend, mit der Produktion von Proben (in-line) oder mit einem Schüttgutstrom erfolgen kann.

Diese Aufgabe wird durch eine Vorrichtung gemäß Anspruch 1 und durch ein Verfahren gemäß Anspruch 4 gelöst. Vorteilhafte Ausgestaltungsformen lassen sich den abhängigen Patentansprüchen entnehmen.

Die vorliegende Erfindung, wie sie nachfolgend beschrieben ist, nutzt als Grundlage dem Fachmann bekannte Techniken der Reflektometrie oder der Ellipsometrie. Die entsprechenden Grundlagen sind beispielsweise in H.G. Tompkins, W.A. McGahan "Spectroscopic Ellipsometry and Reflectometry", Wiley Interscience, 1999 oder in M. Faupel "Abbildende Ellipsometrie und ihre Anwendung", VDI-Berichte Nr. 1996: Optische Messung technischer Oberflächen in der Praxis; 2007 bekannt und werden daher im Folgenden nicht im Detail beschrieben.

Die Erfindung ist in den unabhängigen Ansprüchen 1 (Vorrichtung) und 4 (Verfahren) beschrieben. Eine mögliche Anwendung der erfindungsgemäßen Vorrichtung und des erfindungsgemäßen Verfahrens basiert darauf, für diejenigen Oberflächenelemente der Probe, die auf die Probe eingestrahltes Licht in eine zum Nachweis des Lichts ausgebildete Detektionseinheit reflektieren, zu identifizieren und für diese Oberflächenelemente der Probe (nachfolgend auch als Reflexionselemente bezeichnet) unterschiedliche Polarisationsanteile des zurückgeworfenen Lichts zu erfassen und auszuwerten. Die Probe wird hierzu mit bevorzugt monochromatischem Licht beleuchtet. (Monochromatisches Licht ist nicht unbedingt erforderlich, jedoch z.B. bei Proben mit Dispersion i. d. R. besser geeignet.) Alternativ hierzu oder in Kombination damit ist es ebenfalls möglich, zur Beleuchtung der Probe monochromatische, kohärente Strahlung (Laserlicht) zu verwenden und, durch geeignete Ausbildung der die an der Probe reflektierten Strahlenanteile empfangenden Detektionseinheit, sämtliche vier Stokes-Parameter zu berechnen und zur Charakterisierung des an der Probe reflektierten Lichts (und somit zur Charakterisierung der Probe selbst) heranzuziehen. In jedem Fall werden somit mindestens zwei unterschiedliche (vorzugsweise: orthogonale) Polarisationsanteile im zurückgeworfenen Licht detektiert. (Alternativ zum Begriff des Polarisationsanteils wird nachfolgend im Rahmen der Erfindung bzw. ihrer Anwendung auch der Begriff des "Polarisationszustands" verwendet, obwohl Licht streng genommen lediglich einen Polarisationszustand aufweisen kann; dem Fachmann ist jedoch anhand der Beschreibung jeweils klar, was gemeint ist.)

Dabei wird im Rahmen der nachfolgend beschriebenen Erfindung bzw. ihrer Anwendung unter dem Begriff des von der Probe zurückgeworfenen Lichts all dasjenige von der Probe ausgehende Licht verstanden, was schließlich mittels der erfindungsgemäßen Vorrichtung empfangen wird und zur Auswertung herangezogen werden kann. Bei dem zurückgeworfenen Licht handelt es sich somit i.d.R. um die Summe aus unterschiedlichen Lichtanteilen, nämlich insbesondere aus an der Probe gestreuten Lichtanteilen, an der Probe diffus reflektierten Lichtanteilen und an der Probe spiegelnd reflektierten Lichtanteilen. (Zurückgeworfenes Licht betrifft also gerade diejenigen Lichtanteile, die in die Detektionseinheit gelangen und nicht diejenigen Lichtanteile, die zur Beleuchtungseinheit zurückgelangen.) Nachfolgend wird das aufgrund einer spiegelnden Reflexion zur Detektionseinheit gelangende Licht abgekürzt auch als reflektiertes Licht bezeichnet: Diese Licht betriff somit Licht derjenigen Oberflächenelemente der Probe, die das auf die Probe eingestrahlte Licht unter Erfüllung der Reflexionsbedingung in die Detektionseinheit zurückwerfen.

In einer möglichen Anwendung der erfindungsgemäßen Vorrichtung zur optischen Charakterisierung einer Probe (oder eines oder mehrerer Materialien derselben) kann somit folgendes gemacht werden: Zunächst kann eine Beleuchtungseinheit zur Beleuchtung der Probe ausgerichtet werden (die Beleuchtungseinheit kann auf einen Probenraumabschnitt bzw. ein Raumvolumen gerichtet werden, in den/das die Probe zur Beleuchtung eingebracht wird). Die Vorrichtung kann darüber hinaus eine Detektionseinheit umfassen, die zum Erfassen mehrerer unterschiedlicher (bevorzugt: orthogonaler) Polarisationsanteile ausgebildet ist.

Die Detektionseinheit kann so ausgerichtet werden, dass von der Probe zurückgeworfene Lichtanteile des auf die Probe eingestrahlten Lichts erfasst werden können. Schließlich kann die Vorrichtung für diese Anwendung eine Auswerteeinheit umfassen. Diese kann beispielsweise als Computerprogramm in einem Personal Computer realisiert sein. Ebenso ist es aber denkbar, die Auswerteeinheit als Teil der Detektionseinheit auszubilden (z.B. als in eine Kamera integriertes Auswerteprogramm).

In dieser möglichen Anwendung der Erfindung können mit dieser Auswerteeinheit in den von der Detektionseinheit aufgenommenen Abbildungsdaten (bei dieser Anwendung ist die Vorrichtung somit zur flächigen optischen Abbildung der Probe bzw. eines Probenabschnittes ausgebildet) diejenigen abgebildeten Oberflächenelemente der Probe identifiziert werden, deren zurückgeworfenes, in der Detektionseinheit empfangenes Licht auf einer Reflexion des einfallenden Lichts an der Probe beruht. Diese Oberflächenelemente der Probe werden nachfolgend auch als Reflexionselemente bezeichnet, im Gegensatz zu denjenigen Oberflächenelementen der Probe, die aufgrund anderer physikalischer Effekte als einer Reflexion (z.B. also durch eine Lichtstreuung) Licht in die Apertur der Detektionseinheit zurückwerfen. Die Auswerteeinheit kann für diese mögliche Anwendung der erfindungsgemäßen Vorrichtung schließlich so ausgebildet werden, dass die erfassten unterschiedlichen Polarisationsanteile gerade für die Reflexionselemente ausgewertet werden können, um die gewünschte optische Charakterisierung der Probe zu erhalten.

Auf Basis dieser Auswertung ist es dann beispielsweise möglich, bei dieser möglichen Anwendung Objekte oder Objektbereiche, die einen eng tolerierten Bereich an optischen Materialkonstanten aufweisen, von Objekten mit abweichenden optischen Materialkonstanten zu trennen (Sortiereinrichtung) oder die Einhaltung von optischen Materialkonstanten z.B. in einem Produktionsprozess automatisch zu überprüfen. Insbesondere ist so eine Schüttgutsortierung möglich.

Ein wesentliches Merkmal der vorstehend beschriebenen, möglichen Anwendung der erfindungsgemäßen Vorrichtung bzw. des erfindungsgemäßen Verfahrens ist somit dass, sofern gewünscht, z.B. durch Einsatz einer Auswerteeinheit mit entsprechender Rechenkapazität, auch schritthaltend mit einer Produktion oder auch mit einem Schüttgutstrom, mehrere unterschiedliche (z.B. zwei orthogonale) Polarisationsanteile im durch die Probe zurückgeworfenen Licht für genau diejenigen Oberflächenelemente der Probe ermittelt werden können, deren Normale den Winkel zwischen Beleuchtungseinheit und Detektionseinheit halbiert, die also die Reflexionselemente der Oberfläche der Probe darstellen. Die automatisch Erkennung, ob ein bestimmtes Oberflächenelement (also ein beobachteter Objektpunkt) ein Reflexionselement ist, also die vorstehend genannte Reflexionsbedingung für die Orientierung seiner Oberflächennormale erfüllt, kann, wie nachfolgend noch im Detail beschrieben, beispielsweise durch eine Intensitätsprüfung der von dem abgebildeten Oberflächenelement insgesamt zurückgeworfenen bzw. nachgewiesenen Intensität erfolgen.

Im Rahmen der vorliegenden Erfindung wird unter einer Probe nicht notwendigerweise ein einzelnes körperliches Objekt verstanden, es kann sich bei einer Probe ganz allgemein auch um einen Strom vieler einzelner, bewegter Objekte unterschiedlicher Materialien (also um einen Probenstrom im Rahmen eines zu sortierenden bzw. zu charakterisierenden Schüttgutes, also einen Schüttgutstrom) handeln. Es muss sich bei einer im Rahmen einer Anwendung der Erfindung eingesetzten Beleuchtungseinheit nicht notwendigerweise um eine einzelne Lichtquelle handeln, sondern es können auch parallel mehrere geeignet angeordnete Lichtquellen, die ein und dieselbe Probe beleuchten, eingesetzt werden. In der Regel ist dann für jede der eingesetzten Lichtquellen die Reflexionsbedingung erfüllt. Unter zurückgeworfenem Licht werden im Rahmen der vorliegenden Erfindung all diejenigen Lichtanteile verstanden, die auf durch die Beleuchtungseinheit eingestrahlte und auf die Probe auftreffende Lichtanteile zurückgehen und die durch die Probe nicht absorbiert werden, sondern die durch beliebige Prozesse (Reflexion, Streuung, ...) die Probe bzw. deren Oberfläche - in der Regel in einer anderen Richtung als der Einfallsrichtung - wieder verlassen und somit außerhalb der Probe nachgewiesen werden können.

Eine wesentliche Idee der vorstehend beschriebenen möglichen Anwendung einer erfindungsgemäßen Vorrichtung ist somit, lediglich die an der Probe (spiegelnd) reflektierten Strahlanteile zu erfassen und auszuwerten, also lediglich für die so reflektierten Strahlanteile unterschiedliche Polarisationszustände für die Charakterisierung der Probe auszuwerten, nicht jedoch für die anderen zurückgeworfenen, z.B. gestreuten Strahlanteile. Wie nachfolgend noch näher beschrieben, ist es dabei besonders vorteilhaft, die Beleuchtungseinheit und die Detektionseinheit unter dem Brewster-Winkel anzuordnen, sofern die Charakterisierungsaufgabe beim Einsatz der erfindungsgemäßen Vorrichtung gerade darin besteht, das Vorhandensein eines definierten Materials zu erkennen oder einzelne Elemente dieses definierten Materials in einer eine Vielzahl von Objekten unterschiedlicher Materialien umfassenden Probe zu identifizieren (der in der Vorrichtung eingestellte Brewster-Winkel ist dann der Brewster-Winkel dieses Materials). Diese Anordnung unter dem Brewster-Winkel ist insbesondere aus dem Grunde vorteilhaft, dass die an Proben oder Probenelementen dieses Materials reflektierten Strahlenanteile lediglich eine Polarisationsrichtungen aufweisen, so dass die Materialcharakterisierung auf besonders einfache Art und Weise möglich ist. Eine Anordnung unter dem Brewster-Winkel ist jedoch nicht unbedingt notwendig, da die unterschiedlichen Polarisationsanteile für die Reflexionselemente auf der Oberfläche der Probe auch ohne Einhaltung dieser speziellen Reflexionsbedingung ausgewertet werden können (z.B. hinsichtlich ihrer auftreffenden Intensitäten unterschieden werden können).

In einer ersten vorteilhaften Variante der vorstehend beschriebenen möglichen Anwendung der erfindungsgemäßen Vorrichtung ist die Auswerteeinheit so ausgebildet, dass in den aufgenommenen Abbildungsdaten zuerst die Reflexionselemente identifizierbar sind, bevor für diese (oder auf Basis dieser) identifizierte(n) Reflexionselemente die erfassten unterschiedlichen Polarisationsanteile auswertbar sind. Beispielsweise können die Reflexionselemente anhand einer Auswertung der insgesamt erfassten Intensitäten der einzelnen Oberflächenelemente (bzw. der Bildpixel der durch die Detektionseinheit erfassten Abbilder) festgestellt werden, indem diejenigen Oberflächenelemente als Reflexionselemente identifiziert werden, deren Gesamtintensität (Summe der Intensitäten aller erfasster Polarisationsanteile) oberhalb eines festgelegten Schwellwertes liegt (z.B. kann als Schwellwert derjenige Intensitätswert definiert werden, oberhalb dessen die Intensität von 20 % aller abgebildeter Flächenelemente liegt). Lediglich für die so identifizierten Reflexionselemente werden dann die unterschiedlichen (z.B. orthogonalen) Polarisationsanteile ausgewertet, z.B. getrennt betrachtet, oder hinsichtlich ihrer Intensitätsverhältnisse betrachtet.

Alternativ dazu ist es auch möglich, in den aufgenommenen Abbildungsdaten für alle abgebildeten Flächenelemente (wobei diese sowohl abgebildete Oberflächenelemente der Probe als auch abgebildete Flächenelemente von nicht zur Probe gehörenden, jedoch trotzdem abgebildeten Strukturen umfassen) zunächst die erfassten unterschiedlichen Polarisationsanteile z.B. getrennt oder nach ihren Verhältnissen zu betrachten und (beispielsweise durch Schwellwertsetzung) auszuwerten, um diejenigen Oberflächenelemente der Probe, die Reflexionselemente sind, zu bestimmen. So können beispielsweise alle Flächenelemente, deren Intensität für einen definierten Polarisationsanteil in den Abbildungsdaten einen vorbestimmten Schwellwert überschreitet, als Reflexionselemente definiert werden. Für die so anhand der unterschiedlichen Polarisationsanteile identifizierten Reflexionselemente werden dann die unterschiedlichen Polarisationsanteile (beispielsweise durch Verhältnisbildung der Intensitäten in unterschiedlichen Polarisationsanteilen entsprechenden, durch die Detektionseinheit aufgenommenen Abbildungsdaten bzw. Polarisations-Teilbildern) weiter ausgewertet, um die optische Charakterisierung der Probe durchzuführen.

In einer vorteilhaften Variante der möglichen Anwendung der erfindungsgemäßen Vorrichtung erfolgt das zum Identifizieren der Reflexionselemente notwendige Unterscheiden von Reflexionselementen und von Flächenelementen, deren zurückgeworfenes, empfangenes Licht nicht auf einer Reflexion des einfallenden Lichts an der Probe beruht (Streuelemente), auf Basis der Intensität oder der Intensitäten von Abbildungsdaten eines, mehrerer oder aller der erfassten Polarisationsanteile. Insbesondere können Intensitätsdifferenzen oder auch Intensitätsverhältnisse der unterschiedlichen erfassten Polarisationsanteile zur Bestimmung der Reflexionselemente herangezogen werden. Auch ist es möglich, die Gesamtintensität aller durch die Detektionseinheit erfasster Polarisationsanteile des zur Abbildung gelangenden Lichts zur Identifikation der Reflexionselemente heranzuziehen. So können beispielsweise diejenigen Flächenelemente als Reflexionselemente identifiziert werden, deren zugehörige Abbildungswerte bei den von der Detektionseinheit erfassten Abbildungen in Summe oberhalb eines vordefinierten Schwellwertes liegen. Ein solcher Schwellwert kann z.B. als 90%/10%-Schwellwert definiert werden, d.h. dadurch festgelegt werden, dass 90 % der Gesamtintensitätswerte aller abgebildeter Flächenelemente unterhalb dieses Schwellwertes liegen und 10 % oberhalb.

Alternativ dazu oder auch in Kombination mit der intensitätsbasierten Identifikation der Reflexionselemente können die Reflexionselemente auch auf Basis ihrer Lage in entsprechend der unterschiedlichen Polarisationsanteile (oder auch entsprechend der empfangenen Gesamtintensität) erzeugten Abbildern der Probe definiert werden: Hierzu kann die Lage der Flächenelemente (z.B. unter Berücksichtigung ihrer Intensitäten) relativ zueinander und/oder relativ zu einem oder mehreren Bezugspunkt(en) in den Abbildern der Probe ausgewertet werden. Als Bezugspunkte können insbesondere Mittelpunkte oder Randpunkte von Abbildern der Probe dienen. Beispielsweise können durch geeignete Ausbildung des Probenhintergrundes oder durch zusätzliche Beleuchtung (die für eine konstante, niedrige Hintergrundintensität sorgt) einzelne Elemente der Probe (z.B. Schüttgutpartikel) vom Hintergrund differenziert werden, indem z.B. die Intensitätsänderung am Rand dieser Probenelemente erkannt wird (Auswertung von Gradienten im Bild). Als zusätzliche Bedingung, dass ein betrachtetes Flächenelement ein Reflexionselement der Probe ist, kann dann - neben der vorbeschriebenen Schwellwertsetzung - festgelegt werden, dass sich die Reflexionselemente innerhalb der so erkannten Umrisse einzelner Probenelemente befinden müssen.

Im Gegensatz dazu sind dann diejenigen Flächenelemente, deren Intensität bzw. Helligkeit unterhalb der vorbeschriebenen, einstellbaren Schwelle liegt, nicht Reflexionselemente sondern Streuelemente. Auch außerhalb der wie vorbeschrieben identifizierbaren Probenelementgrenzen liegende Flächenelemente sind keine Reflexionselemente der Probe. Eine weitere Auswertung dieser Flächenelemente ist somit bei einer möglichen Anwendung der erfindungsgemäßen Vorrichtung nicht sinnvoll.

In einer weiteren vorteilhaften möglichen Anwendung der erfindungsgemäßen Vorrichtung erfolgt die Auswertung der identifizierten Reflexionselemente zum Zweck der optischen Charakterisierung der Probe wie folgt: Aus unterschiedlichen, für die identifizierten Reflexionselemente von der Detektionseinheit aufgenommenen Polarisationsanteilen (z.B. aus zwei zueinander orthogonalen linearen Polarisationsanteilen) wird ein Verhältnis gebildet. Dies kann beispielsweise dadurch geschehen, dass für all die Flächenelemente, die als Reflexionselemente identifiziert wurden, der Intensitätswert im für einen ersten Polarisationsanteil aufgenommenen Abbild durch den Intensitätswert des entsprechenden Reflexionselementes im für einen zweiten, unterschiedlichen (z.B. orthogonalen) Polarisationsanteil aufgenommenen Abbild geteilt wird.

Über- oder unterschreitet das so gebildete Verhältnis dann für eine bestimmte Mindestzahl von Reflexionselementen (relativ zur Gesamtzahl von Flächenelementen und/oder von Reflexionselementen) einen bestimmten Wert, so lässt sich damit eine Aussage über das Vorliegen oder Nicht-Vorliegen eines definierten Materials in der Probe treffen: Stellt man beispielsweise als Reflexionsbedingung für die Reflexionselemente den Winkel zwischen der optischen Achse der Detektionseinheit einerseits und der optischen Achse der Beleuchtungseinheit andererseits in dem durch die Detektionseinheit, die Beleuchtungseinheit und die Probe aufgespannten Dreieck auf das Doppelte des Brewster-Winkels eines gesuchten Materials ein (die Reflexionselemente sind dann diejenigen Oberflächenelemente der Probe, deren Normale den Winkel zwischen den beiden vorgenannten Achsen halbiert), so werden all diejenigen Reflexionselemente, die dem gesuchten Material zugeordnet werden können, lediglich parallel zur Oberfläche der Probe polarisierte Lichtanteile reflektieren, nicht jedoch Lichtanteile mit einer Polarisationsrichtung senkrecht dazu. Dies kann jedoch über eine entsprechende Schwellwertsetzung für das wie vorbeschrieben berechnete Verhältnis erfasst werden, so dass eine Unterscheidung von Probenelementen des gesuchten Materials von Probenelementen aus einem anderen Material möglich ist.

In einer möglichen Anwendung der Erfindung ist es somit möglich zu prüfen, ob das Verhältnis von Intensitäten unterschiedlicher Polarisationsanteile in einem gewissen Bereich liegt, um definierte Materialien von anderen Materialien zu unterscheiden. Insbesondere bei Schüttgutströmen als Proben kann dabei auch die absolute Anzahl derjenigen Bildpunkte bzw. Flächenelemente in den durch die Detektionseinheit aufgenommenen Abbildungsdaten, für die das wie vorbeschrieben berechnete Verhältnis einen Schwellwert über- oder unterschreitet, als Sortierkriterium verwendet werden. Alternativ dazu ist es möglich, nicht die absolute Anzahl solcher Flächenelemente, sondern die relative Anzahl dieser Flächenelemente im Vergleich zu denjenigen Flächenelementen, die das Schwellwertkriterium nicht erfüllen, zu bewerten.

Entscheidend bei den vorbestehend beschriebenen Varianten der möglichen Anwendung der Erfindung ist die Überlegung, dass es auch bei unregelmäßigen Oberflächen von Proben (z.B. von Schüttgütern) bei jedem Objekt bzw. Element der Probe mindestens einen Punkt, also ein Oberflächenelement, gibt, der/das die Reflexionsbedingung erfüllt, mit dem das Objekt somit charakterisiert werden kann.

Besonders vorteilhaft ist es, im Rahmen der möglichen Anwendung der Erfindung Oberflächenelemente bzw. Reflexionselemente aus unterschiedlichen Richtungen gleichzeitig oder auch nacheinander zur Auswertung heranzuziehen. So reicht es natürlich grundsätzlich aus, dass die verwendete Beleuchtungseinheit lediglich ein einziges Beleuchtungselement (z.B. eine einzige monochromatische Lichtquelle, siehe nachfolgendes Ausführungsbeispiel 1) aufweist.

Die Beleuchtungseinheit kann jedoch auch mehrere einzelne Beleuchtungselemente umfassen, die zur Beleuchtung der Probe mit einfallendem Licht aus unterschiedlichen Richtungen ausgebildet sind. Dabei kann der Winkel zwischen der Detektionseinheit bzw. deren optischer Achse einerseits und dem jeweiligen Beleuchtungselement bzw. dessen optischer Achse andererseits in dem durch die Detektionseinheit, das entsprechende Beleuchtungselement und die Probe aufgespannten Dreieck bei allen Beleuchtungselementen identisch sein. Vorteilhafterweise können zwei oder vier einzelne Beleuchtungselemente verwendet werden. Die Beleuchtungselemente können auf der der Detektionseinheit gegenüberliegenden Seite der Probe und in einer bevorzugt senkrecht zur optischen Achse der Detektionseinheit ausgerichteten Ebene angeordnet sein. Insbesondere können die einzelnen Beleuchtungselemente in äquidistanten Winkelabständen auf einem Kreis um die optische Achse der Detektionseinheit herum in dieser Ebene angeordnet sein. Beispielsweise können so, bei der Verwendung von vier Beleuchtungselementen, diese in Winkelabständen von 90° auf einem Kreis um die optische Achse der Detektionseinheit herum angeordnet werden. Für alle diese Beleuchtungselemente können dann die vorstehend für die Beleuchtungseinheit beschriebenen Winkelverhältnisse (z.B. Einstellung auf einen Brewster-Winkel für ein definiertes Material) eingehalten werden.

Alle im Rahmen der möglichen Anwendungen eingesetzten erfindungsmäßen Vorrichtungen zur optischen Charakterisierung können durch geeignetes Vorsehen weiterer Bauteile (z.B. Probenlagerungseinheiten etc.) zur Oberflächenprüfung von ebenen Beschichtungen als Probe ausgebildet werden.

Ebenso ist es jedoch möglich, die erfindungsgemäße Vorrichtung zur Charakterisierung, Differenzierung und/oder Trennung von einzelnen Elementen einer eine Vielzahl von Elementen umfassenden Probe (insbesondere: Schüttgutstrom) weiterzubilden. Dies kann beispielsweise dadurch geschehen, dass die Beleuchtungseinheit und die Detektionseinheit zur Beleuchtung und Abbildung eines freien Fallstreckenstücks, z.B. unterhalb eines Rüttlers für Schüttgut, angeordnet werden.

Alternativ dazu können selbstverständlich auch Förderbandabschnitte, auf denen Schüttgut transportiert wird, von der Beleuchtungseinheit beleuchtet und der Detektionseinheit abgetastet werden. Letztgenannte Vorrichtungen können dann insbesondere auch zum Aussortieren von Probenelementen, die von einem oder mehreren vordefinierten Materialparameter(n) (der/die zur optischen Charakterisierung durch Auswertung der Reflexionselemente bestimmt wird/werden) abweichen, ausgebildet sein.

Die erfindungsgemäße Vorrichtungen ist als Laserscannersystem ausgebildet mit einer die Probe bzw. den Probenraumabschnitt, in dem diese Probe angeordnet wird, ein- oder zweidimensional abscannenden Beleuchtungseinheit auf Basis eines oder mehrerer Laser(s) und mit einer oder mehreren geeigneten Empfangseinheit(en) als Detektionseinheit.

Als Detektionseinheit kann/können dann eine oder mehrere Kamera(s), insbesondere Polarisationskamera(s) und/oder CCD-basierte Kamera(s), eingesetzt werden.

Die Beleuchtung der Probe erfolgt vorteilhafterweise mit einer oder mehrerer definierter/n Wellenlänge(n) im sichtbaren Bereich; grundsätzlich ist es jedoch auch denkbar, z.B. Infrarotstrahlung zur Beleuchtung zu verwenden, sofern dann die Empfangseinheiten entsprechend angepasst werden.

Nachfolgend werden nun einige konkrete Realisierungen des Beleuchtungseinheit-Detektionseinheit-Systems bzw. des Lasers und des Empfängers bei der vorliegenden Erfindung bzw. bei Anwendungen derselben beschrieben:

So kann eine in einer Reflexionsanordnung wie vorbeschrieben eingesetzte Kamera, mit der beispielsweise für jedes abgetastete Flächenelement zwei orthogonale Polarisationsanteile erfasst werden können, eine aus zwei Einzelkameras bestehende Kamera sein. Im Strahlengang vor den Einzelkameras ist ein polarisierendes optisches Element (z.B. Prisma oder Strahlteiler) angeordnet, mit dem das von der Probe zurückgeworfene Licht in die zwei unterschiedlichen Polarisationsanteile zerlegt werden kann. Das Licht des einen Polarisationsanteils wird dann durch das polarisierende optische Element auf die eine Einzelkamera gelenkt, das Licht des anderen Polarisationsanteils auf die andere der beiden Einzelkameras. Dabei ist vorteilhafterweise eine Pixelanpassung vorzusehen, um die Lage der erfassten Reflexionselemente in den Bildern der beiden Einzelkameras abzugleichen.

Alternativ dazu kann eine mehrzeilige Kamera vorgesehen sein, wobei im Strahlengang vor dieser Kamera eine der Zeilenzahl der Kamera entsprechende Zahl von Polarisatoren vorgesehen ist. Dabei existieren zwei (oder mehr, z.B. sechs) unterschiedliche Arten von Polarisatoren, beispielsweise zwei orthogonal zueinander ausgerichtete Polarisatoren (bei sechs Polarisatoren z.B. 0°, 45°, 90°, 135°, linkszirkular und rechtszirkular polarisierende Polarisationen).Die zwei oder mehr Polarisiationrichtungen werden von der Kamera erfasst: Vor den einzelnen Zeilen der Kamera werden bei zwei unterschiedlichen Polarisatoren abwechselnd Polarisatoren des einen Typs und des anderen Typs angeordnet, so dass abwechselnd auf die Kamerazeilen jeweils Licht eines ersten Polarisationsanteils und eines zweiten, z.B. zum ersten Polarisationsanteil orthogonalen Polarisationsanteils abgebildet wird. Bei z.B. sechs verschiedenen Polarisatoren werden dementsprechend sechs benachbarte Zeilen für die sechs unterschiedlichen Typen benötigt.

Alternativ dazu kann eine Kamera verwendet werden, die im Strahlengang vor ihrem Sensorchip einen Polarisations-Streifen-Filter oder einen Polarisations-Mosaik-Filter umfasst. Ein solcher Filter zerlegt das von der Probe zurückgeworfene Licht in die unterschiedlichen Polarisationsanteile, die dann zeilenweise oder entsprechend der Mosaikanordnung des Filters auf die jeweiligen Sensorzellen des Kamerachips gerichtet werden (welche Sensorzellen des Chips Licht welchen Polarisationsanteils empfangen, ist aufgrund der vorbekannten Filterform bekannt, so dass die Auswertung entsprechend erfolgen kann).

Ebenso ist es denkbar, mehrere unterschiedlich polarisierte Beleuchtungs-Untereinheiten (z.B. Einzellampen) vorzusehen, die alle zur Beleuchtung der Probe mit einfallendem Licht ausgerichtet sind. Die einzelnen Beleuchtungs-Untereinheiten werden zeitlich nacheinander ein- und wieder ausgeschaltet, beleuchten also die Probe jeweils nacheinander für eine vordefinierte Zeitdauer. Die einzelnen Polarisationsanteile werden dann während unterschiedlicher, genau definierter Zeitintervalle jeweils von der gesamten Kamerafläche einer nicht polarisationssensitiven Kamera (bevorzugt wird eine mehrzeilige Kamera eingesetzt) erfasst, die unterschiedlich polarisierten Beleuchtungen werden somit quasi geblitzt. Sofern die Vorrichtung bei bewegten Proben (Schüttgutstrom) eingesetzt wird, ist die Blitzfrequenz bzw. die Frequenz des Umschaltens zwischen den einzelnen Beleuchtungs-Untereinheiten vorteilhafterweise mit der Probengeschwindigkeit zu synchronisieren.

Diese Synchronisierung hat den folgenden Vorteil: In der Regel ist die Probe bei der Abtastung (z.B. auf einer entsprechenden Fallstrecke oder auch Flugstrecke bei einem z.B. parabelförmigen Abwurf von einem Förderband) in Bewegung, das heißt das Abbild der Probe verschiebt sich bei den einzelnen zur Auswertung zeitlich aufeinanderfolgend aufgenommenen Kamerabildern in diesen Kamerabildern, ändert also seine Lage in den einzelnen Kamerabildern. Da nun jedoch in der Regel die beiden (oder die mehr als zwei) Polarisationszustände von ein und demselben Punkt bzw. Oberflächenelement der Probe benötigt werden, muss in der Regel bekannt sein, wie weit die Probe zwischen zwei benachbarten Kamerabildern gewandert ist, um auch tatsächlich die Polarisationszustände ein und desselben Oberflächenelements der Probe zu erfassen und auszuwerten (wird so z.B. festgestellt, dass die Probe zwischen zwei zeitlich benachbarten Kamerabildern um fünf Pixel hinsichtlich ihres Abbildes verschoben ist, so kann eine entsprechende Verschiebung der zeitlich benachbarten Kamerabilder erfolgen, um die Probenbewegung auszugleichen).

Ein nicht die Erfindung zeigender kamerabasierter Systemaufbau für die Beleuchtungseinheit und die Detektionseinheit verwendet eine LED-Beleuchtung, in der die einzelnen LED-Beleuchtungselemente, die Licht einer Wellenlänge emittieren, so angeordnet sind, dass für jeden Bildpunkt bzw. für jedes abgebildete Flächenelement über die gesamte abzutastende Probenoberfläche (gesamtes Kameraabbild) die gleiche Reflexionsbedingung gegeben ist. Dies kann durch unterschiedliche Neigungswinkel der einzelnen LED-Elemente in einer Leiste, durch eine Anordnung dieser Elemente auf einer gebogenen Platine oder bei ebener Anordnung der LED-Elemente durch eine Vorsatzoptik erreicht werden.

Durch die gebogene Platine oder die Vorsatzoptik können insbesondere Effekte der z.B. trichterförmigen Kameraöffnung ausgeglichen werden (die ansonsten eine exakte Erfassung und Auswertung verhindern würden): Die Kamera hat dann durch die entsprechende gebogene Platine oder Vorsatzoptik keinen telezentrischen Strahlengang mehr, sondern einen fächerförmigen, der dazu führt, dass tatsächlich für jeden Bildpunkt über die gesamte abzutastende Probenoberfläche die gleichen Reflexionsbedingungen gegeben sind.

Im Rahmen der vorliegenden Erfindung ist es auch möglich, die verwendete Beleuchtungseinheit mit Mitteln zur Änderung und/oder Einstellung der Polarisation der Beleuchtung zu versehen (beispielsweise LC-Element, wie in LC-Displays verwendet). Die Beleuchtung der Probe kann dann, wie beim vorstehend beschriebenen "Blitzen", nacheinander mit unterschiedlichen Polarisationszuständen erfolgen. Für jeden Beleuchtungs-Polarisationszustand können dann, wie vorstehend beschrieben, für die Reflexionselemente unterschiedliche Polarisationsanteile erfasst und ausgewertet werden.

Alternativ zum Ein- und Ausschalten bzw. zum Beleuchten der Probe durch "Blitzen" können somit auch geeignete, die gewünschten Polarisationszustände herbeiführende Polarisatoren vor der Beleuchtungseinheit (bzw. im Strahlengang zwischen Beleuchtungseinheit und Probe) aufgestellt werden.

Erfindungsgemäß werden die Beleuchtungseinheit und die Detektionseinheit zusammen mit einem polarisationserhaltenden Retroreflektor eingesetzt: Bei dem in Form eines Laserscanners als Beleuchtungseinheit eingesetzten Laser und dem als zugehörige Detektionseinheit geeignet ausgebildeten Empfänger (der einen polarisationserhaltenden Strahlteiler zum Teilen des auftreffenden Laserlichts in zwei Teilstrahlengänge sowie, in diesen Teilstrahlengängen, polarisierende optische Elemente aufweist) sind die Beleuchtungseinheit und die Detektionseinheit als integrierte Sende- und Empfangseinheit ausgebildet. Es ist ein Retroreflektor vorgesehen, wobei die kombinierte Sende- und Empfangseinheit und der Retroreflektor wie folgt ausgebildet und angeordnet werden: In der kombinierten Sende- und Empfangseinheit werden Sender- und Empfangsstrahlengang über einen Strahlteiler vorzugsweise auf die gleiche Achse gekoppelt. Der Sender beleuchtet die Probe, die von der Probe zurückgeworfenen (das heißt gestreuten, diffus reflektierten oder spiegelnd reflektierten) Strahlenanteile werden an dem Retroreflektor in sich zurückreflektiert und gelangen über die Probe in die kombinierte Sende- und Empfangseinheit und dort über einen Strahlteiler in den Empfängerstrahlengang des Empfängers dieser kombinierten Sende- und Empfangseinheit.

Dort wo bei einer nicht integriert ausgebildeten, entsprechenden Anordnung eines Lasers und eines zum Empfang des zurückgeworfenen Lichts des Lasers geeignet ausgebildeten und ausgerichteten Empfängers der Empfänger stehen würde, ist im vorbeschriebenen Fall, also bei der Erfindung, der Retroreflektor angeordnet. Dies hat den Vorteil, dass (da die Strahlanteile über das Objekt in die kombinierte Sende- und Empfangseinheit gelangen) die Strahlung zweifach an der Probe bzw. am Objekt reflektiert werden. Es erfolgt somit eine verbesserte Abbildung der Probe bzw. des Objekts mit verbessertem Intensitätsverhältnis (liegt z.B. bei einfacher Reflexion an der Probe ein Intensitätsverhältnis von 1 : 1000 vor, so beträgt das Intensitätsverhältnis bei diesem Aufbau 1 : 1000$^2$). Durch geeignete Retroreflektoren bzw. Einstellung der Rückreflexion kann zudem ein sehr kompakter Aufbau realisiert werden.

Schließlich wird im Rahmen der Erfindung mit dem Retroreflektor als Beleuchtungseinheit ein die Probe zeilenweise oder rasterförmig abscannender Laser eingesetzt (Laserscannersystem). Die Detektionseinheit umfasst einen zum Empfang des von der Probe zurückgeworfenen Laserlichts geeigneten Empfänger mit einem oder mehreren optischen Element(en) zur Trennung des empfangenen Laserlichts nach den unterschiedlichen Polarisationsanteilen. Im Empfänger sind mehrere Empfangselemente ausgebildet, deren Anzahl der durch die Trennung resultierenden Anzahl von Teilstrahlen entspricht.

In einer möglichen Anwendung der Erfindung kann die Auswerteeinheit durch Prüfung der empfangenen Gesamtintensität feststellen, ob Flächenelemente Reflexionselemente der Probe sind, also die Reflexionsbedingung erfüllen.

Die Auswerteeinheit der vorstehend beschriebenen Vorrichtungen zur optischen Charakterisierung kann, bei einer möglichen Anwendung der Erfindung, so ausgebildet sein, dass mit ihr die Reflexionselemente der Probe identifizierbar sind (beispielsweise durch Auswertung der von jedem Objektpunkt empfangenen Gesamtintensität als Kriterium dafür, ob der entsprechende Objektpunkt die Reflexionsbedingung erfüllt, also die für eine weitere Auswertung nötige Ausrichtung seiner Oberfläche aufweist). Die Reflexionselemente können dabei mit der Auswerteeinheit zur optischen Charakterisierung der Probe weiter ausgewertet werden, d.h. es kann/können bei dieser möglichen Anwendung der Erfindung eine oder mehrere Verarbeitungsstufe(n) vorgesehen sein, um durch Auswertung der signifikanten Oberflächenelemente bzw. der Reflexionselemente eine Gesamtcharakterisierung der Probe durchzuführen.

Um im Rahmen dieser Gesamtcharakterisierung weitere Proben- und/oder Materialparameter der Probe zu erfassen, können zusätzlich Verzögerungselemente (z.B. $\lambda/4$-Platten) vor der Beleuchtung vorgesehen werden. Auch ist es möglich, weitere Strahlteiler bzw. Filter vor der Detektionseinheit bzw. deren lichtsensitiver Fläche einzusetzen. Die Ausrichtung, Einstellung und Anordnung solcher Verzögerungselemente und/oder Strahlteiler oder Filter kann so erfolgen, dass die Bestimmung weiterer Stokes-Parameter möglich ist. Insbesondere kann die monochromatische kohärente Beleuchtungseinheit (Laser) so vorgesehen sein, dass, aufgrund von dem Fachmann bekannten physikalischen Nebenbedingungen, zur vollständigen Charakterisierung des Polarisationszustands des durch die Probe zurückgeworfenen Lichts lediglich drei Stokes-Parameter statt vier Stokes-Parameter nötig sind.

Bei möglichen Anwendungen der Erfindung sind Systeme mit Einfalls- und Ausfallswinkeln zwischen den Spezialfällen 0° und 180° möglich.

Im Spezialfall von 90° und bei der Verwendung der kombinierten Beleuchtungs- und Detektionseinheit bzw. Sende- und Empfangseinheit befindet sich der Retroreflektor hinter der Probe. Im Spezialfall einer 90°-Anordnung handelt es sich um einen Polarimetrieaufbau zur optischen Charakterisierung transparenter Objekte. Auch in diesem Fall erhält man im Vergleich zu Anordnungen nach dem Stand der Technik den Vorteil, dass eine erheblich schnellere Auswertung erfolgen kann: Durch eine vollständige Charakterisierung des Polarisationszustands kann die bei Geräten nach dem Stand der Technik notwendige Variation der Beleuchtungsbedingungen entfallen. Dadurch erst wird eine mit der Produktion von Gütern schritthaltende Prüfung möglich. Genau wie im Fall der Reflexionsauswertung ist in diesem Fall eine Prüfung der Gesamtintensität sinnvoll, um die zur Charakterisierung der Probe relevanten Objektpunkte bzw. Oberflächenelemente zu finden. Diese Punkte sind in diesem Fall jedoch keine Reflexions- sondern Transmissionselemente. In diesem Fall kann es sich bei den von der Probe zurückgeworfenen Lichtanteilen also auch um durch die Probe hindurch transmittierte Anteile (Transmission statt Reflexion oder auch beide Anteile: Transmission wie Reflexion) handeln. Die Vorrichtung kann also auch als Transmissionssystem oder Transmissions-Reflexionssystem ausgebildet sein.

Somit umfasst die erfindungsgemäße Vorrichtung zur optischen Charakterisierung die folgenden Elemente: einen zum ein- oder zweidimensionalen Abscannen eines Probenraumabschnitts, in dem die Probe eingebracht werden kann, mit einfallendem Licht ausgerichteten Laser (Beleuchtungseinheit). Zum Empfang des durch die Probe zurückgeworfenen Lichts ist ein zum Empfang von Laserlicht geeigneter Empfänger als Detektionseinheit vorgesehen. Dieser Empfänger umfasst einen ersten, bevorzugt polarisationserhaltenden Strahlteiler zum Teilen des auf den Empfänger auftreffenden Laserlichts in einen ersten und einen zweiten Teilstrahlengang. In jedem dieser beiden Teilstrahlengänge ist ein polarisierendes optisches Element (z.B. polarisierendes Prisma oder polarisierender Strahlteiler) vorgesehen, mit dem das Licht des jeweiligen Teilstrahlengangs in zwei unterschiedliche Polarisationsanteile zerlegt werden kann. Im Strahlengang jedes der beiden so getrennten Polarisationsanteile ist jeweils ein Empfangselement vorgesehen, mit dem der jeweilige Polarisationsanteil nachgewiesen werden kann (es sind somit insgesamt vier Empfangselemente vorgesehen, zwei in jedem der vorstehend beschriebenen Teilstrahlengänge). Lediglich in einem der beiden Teilstrahlengänge ist darüberhinaus nach dem Strahlteiler und vor dem polarisierenden optischen Element ein Polarisations-Änderungselement vorgesehen, mit dem die Polarisation dieses Teilstrahlengangs verändert werden kann. Bei diesem Änderungselement kann es sich insbesondere um eine Verzögerungsplatte handeln, die vorzugsweise als Ä/4-Platte ausgebildet ist.

Die Auswerteeinheit der Vorrichtung ist so ausgebildet, dass mit ihr auf Grundlage der mit den mehreren Empfangselementen des Empfängers nachgewiesenen unterschiedlichen Polarisationsanteilen der Polarisationszustand des von der Probe zurückgeworfenen Lichts zur optischen Charakterisierung derselben vollständig bestimmt werden kann.

Hierzu können insbesondere der Strahlteiler, die polarisierenden optischen Elemente, das Änderungselement und die vier Empfangselemente so ausgebildet sein, angeordnet werden und eingestellt werden, dass drei von vier Stokesparametern des zurückgeworfenen Lichts aus den nachgewiesenen unterschiedlichen Polarisationsanteilen berechenbar sind. Da das einfallende Laserlicht vollständig polarisiert ist, reicht die Bestimmung von drei der vier Stokesparameter aus, um (unter Heranziehen einer Nebenbedingung für monochromatisches, kohärentes Licht) den vierten Stokesparameter zu berechnen und somit den Polarisationszustand des zurückgeworfenen Lichtes vollständig zu charakterisieren. Anhand des so vollständig bestimmten Polarisationszustandes des zurückgeworfenen Lichtes können dann z.B. unterschiedliche Materialien verschiedener Probenelemente einer Schüttgutprobe identifiziert und unterschieden werden.

Nachfolgend wird die vorliegende Erfindung im Detail beschrieben. Dabei zeigen:

Figur 1 eine erste Ausführungsform, die eine nicht-erfindungsgemäße Vorrichtung zeigt (unter Einsatz eines einzelnen Beleuchtungselements als Beleuchtungseinheit).

Figur 2 eine weitere Ausführungsform, die nicht die Erfindung zeigt (wobei die Beleuchtungseinheit aus zwei separaten Beleuchtungselementen besteht).

Figur 3a bis 3d Beispiele für die Identifizierung eines definierten Materials in einem Schüttgutstrom unterschiedlicher Materialien.

Figur 4 ein Beispiel für eine als Prüfsystem für Beschichtungen ausgebildete Vorrichtung, die nicht die erfindungsgemäße Vorrichtung ist.

Figur 5 eine Ausführungsform der Erfindung, die zur vollständigen Charakterisierung des Polarisationszustands des zurückgeworfenen Lichts ausgebildet ist.

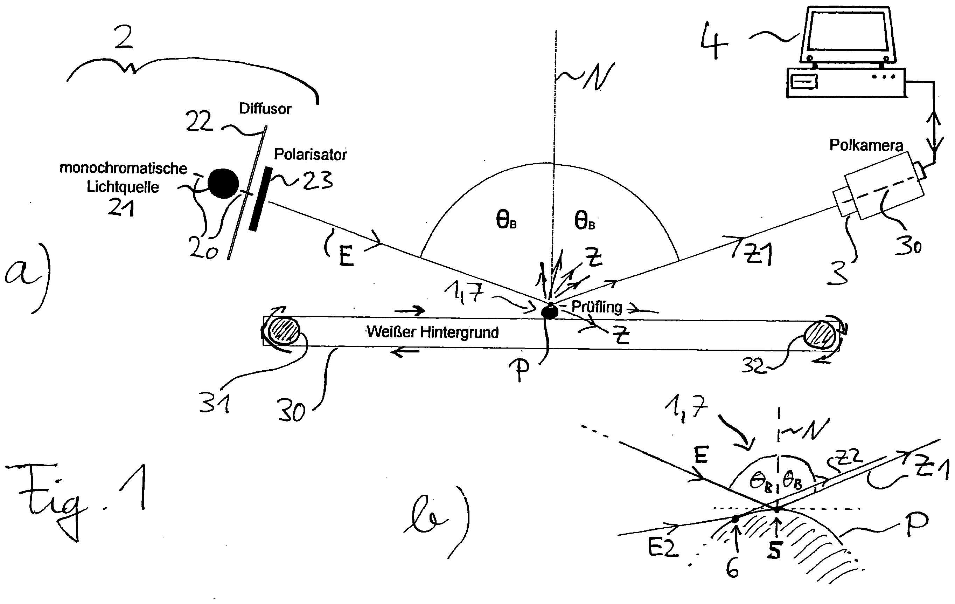

Figur 1a) zeigt eine zur Charakterisierung einzelner Probenelemente bzw. Prüflinge P ausgebildete Vorrichtung in Form eines Schüttgutsortiersystems. Die einzelnen Objekte des Schüttgutstromes bzw. der Probe P werden auf einem ebenen Transportband 30 transportiert, dessen äußere Oberfläche, auf dem die Elemente der Probe P zum Liegen kommen, weiß ist. Dies dient einer besseren Identifizierung der einzelnen Probenelemente im Bild (s. nachfolgend). Das Transportband 30 wird durch zwei Walzen 31, 32 angetrieben; der Transport der Probenelemente P erfolgt hier im Bild nach rechts (Pfeile); weitere Elemente der Schüttgutsortiervorrichtung (z.B. Ausblaseinheiten oder Sammelbehälter für die Probenelemente unterschiedlichen Materials) sind hier nicht gezeigt.

Die Beleuchtungseinheit 2 der gezeigten Vorrichtung umfasst eine monochromatische Lichtquelle 21, die hier als LED-Leiste, die im grünen Bereich (550 nm) emittiert, ausgebildet ist. Im Strahlengang nach der Lichtquelle 21 ist ein Diffusor 22 angeordnet, der die Modellierung der LED-Struktur 21 verringert. Im Strahlengang hinter Lichtquelle 21 und Diffusor 22 weist die Beleuchtungseinheit 2 darüber hinaus noch einen Polarisator 23 auf. Die optische Achse der aus den Elementen 21, 22 und 23 bestehenden Beleuchtungseinheit 2 ist hier mit dem Bezugszeichen 2o gekennzeichnet. Das entlang der optischen Achse 2o der Beleuchtungseinheit 2 auf die Probe P einfallende Licht E trifft unter einem Winkel $\theta_B$ (bezogen auf die Normale N zur mit den einzelnen Probenelementen belegten Oberfläche des Transportbandes 30) auf die Oberfläche des Probenraumabschnittes 1, der hier ein definiertes Flächensegment parallel zur Längsrichtung des Transportbandes 30 umfasst. Der entsprechende Förderbandabschnitt ist hier mit dem Bezugszeichen 7 versehen.

Die Detektionseinheit 3 des gezeigten Systems ist, bezogen auf das Förderband 30, in demselben Halbraum wie die Beleuchtungseinheit 2 (also im oberhalb des Transportbandes 30 liegenden Halbraum) angeordnet, jedoch, bezogen auf den von der Beleuchtungseinheit 2 beleuchteten Förderbandabschnitt 7 bzw. den Probenraumabschnitt 1 gesehen, auf der der Beleuchtungseinheit 2 gegenüber liegenden Seite diesem Halbraum angeordnet. Die optische Achse der als Polarisationskamera ausgebildeten Detektionseinheit 3 ist hier mit dem Bezugszeichen 3o bezeichnet.

Die Beleuchtungseinheit 2 bzw. deren optische Achse 2o, der Mittelpunkt des Probenraumabschnitts 1 bzw. des beleuchteten Förderbandabschnitts 7 und die Detektionseinheit 3 bzw. die optische Achse 3o derselben bilden ein gleichschenkliges Dreieck, dessen Langseite durch die Verbindungslinie Lichtquelle 2 - Detektionseinheit 3 und dessen Katheten durch die Verbindungslinien Lichtquelle 2 - Probenraumabschnitt 1, 7 und Probenraumabschnitt 1, 7 - Detektionseinheit 3 gebildet werden (Reflexionsanordnung). Die Normale N der Langseite dieses Dreiecks bzw. die Normale zur Förderbandoberfläche halbiert somit den Winkel zwischen den beiden optischen Achsen 2o und 3o in zwei gleichgroße Winkel $\theta_B$, wobei hier $\theta_3 = 63°$ gilt.

Mit der Detektionseinheit 3 ist eine Auswerteeinheit 4 in Form eines Personal Computers mit geeignet ausgebildeten Auswerteprogrammen über eine bidirektionale Datenleitung verbunden.

Nachfolgend wird die Funktionsweise der in Fig. 1a) gezeigten Vorrichtung beschrieben.

Die Vorrichtung ist zur Unterscheidung von Probenelementen aus Zirkon von Probenelementen aus Glas eingestellt. Hierzu wurde der Winkel $\theta_B = 63°$ auf den Brewsterwinkel des Materials Zirkon eingestellt. Die Auswertung bzw. die optische Charakterisierung beruht nun auf der Idee, dass die dem Beleuchtungseinheit-Detektionseinheit-Halbraum zugewandten Oberflächenabschnitte der einzelnen Probenelemente stetig differenzierbar sind, dass es (vgl. Fig. 1b) somit für jedes Probenelement P mindestens ein Flächenelement gibt, dessen Normale parallel zur Normalen N bzw. zur Winkelhalbierenden der beiden optischen Achsen 2o, 3o ausgerichtet ist. Für ein solches Oberflächenelement eines Probenelements P trifft somit die einfallende Strahlung E genau unter dem Brewsterwinkel $\theta_B$ von Zirkon auf die Oberfläche des Probenelementes P.

Fig. 1b) skizziert, wie diejenigen Flächenelemente, für die diese Reflexionsbedingung erfüllt ist, die also Reflexionselemente 5 der Probenelemente P sind, von anderen abgebildeten Flächenelementen der Probe oder von abgebildeten Flächenelementen des Hintergrundes bzw. der Förderbandoberfläche (diese Flächenelemente werden nachfolgend zusammenfassend als Streuelemente 6 bezeichnet, obwohl der ihrer Abbildung zugrundeliegende physikalische Prozess auch ein anderer als ein Streuprozess sein kann) unterschieden werden können: Zwar gelangt (bezogen auf die insgesamt zurückgeworfene Lichtstrahlung Z) nicht nur von Reflexionselementen 5 der Probe P ein reflektierter Strahlanteil Z1 in die Detektionseinheit 3 und führt dort zu einer Abbildung des entsprechenden Flächenelements durch die Detektionseinheit 3, sondern es gelangt auch z.B. an einem Streuelement 6 gestreutes Licht Z2 ebenfalls in den Detektor 3 (in Fig. 1b) ist dies z.B. bereits einmal an der Oberfläche des Förderbandes 30 reflektiertes und daher aus einer nicht mit der optischen Achse 2o übereinstimmenden Einfallsrichtung E2 auf das Streuelement 6 der Oberfläche der Probe P einfallendes Licht, das dann in Richtung Z2 = Z1 in die Polarisationskamera 3 gestreut wird). Gestreutes Licht von Streuelementen 6 lässt sich jedoch von reflektiertem Licht von Reflexionselementen 5 durch Auswertung der Intensität eines durch die Polarisationskamera 3 aufgenommenen Polarisationsanteils (s. nachfolgend) oder auch durch Auswertung der auftreffenden Gesamtintensitäten aller erfassten Polarisationsanteile unterscheiden. So bewirken die Reflexionselemente 5 z.B. eine deutlich höhere auf das entsprechende Bildelement der Polarisationskamera 3 auftreffende Gesamtintensität als die Streuelemente 6. Die beiden Typen 5, 6 von Flächenelementen können daher durch Setzen eines vorbestimmten Schwellwertes (der beispielsweise aus einer mittleren Intensität über das gesamte Abbild ermittelt werden kann) unterschieden werden. Oberflächenelemente 5, die die Reflexionsbedingung erfüllen, sind daher in der Abbildung besonders hell. Diese Oberflächenelemente 5 alleine werden dann zur Charakterisierung der Probe P bzw. deren einzelner Probenelemente weiter ausgewertet.

Um sicherzugehen, dass es sich bei den bestimmten Reflexionselementen 5 auch tatsächlich um abgebildete Flächenelemente von Probenelementen P (und nicht z.B. um am weißen Hintergrund bzw. an der Oberfläche des Förderbandes 30 reflektierte Lichtanteile) handelt, kann weiterhin die Lage der potenziellen Kandidaten für Reflexionselemente 5 im gesamten aufgenommenen Abbild ausgewertet werden: Durch dem Fachmann bekannte Bildverarbeitungsalgorithmen zur Kantendetektion können beispielsweise (Suche nach geschlossenen Kurven im ein- oder zweifach abgeleiteten und schwellwertbehandelten Abbild) die Lage, die Größe und die Form der einzelnen Probenelemente der Probe P festgestellt werden. Reflexionselemente R können dann lediglich solche Flächenelemente bzw. Punkte im Bild sein, die innerhalb des Abbilds eines Probenelements bzw. innerhalb solcher geschlossener Kurven zum Liegen kommen. Zur Bestimmung der Reflexionselemente 5 kann also eine Kombination aus Intensitäts- und Lageauswertungen eingesetzt werden (lediglich besonders helle Oberflächenelemente im Mittelbereich der Abbildung eines Schüttgutobjekts P können somit in dem System der Fig. 1 Reflexionselemente 5 sein).

Die weitere Auswertung der identifizierten Reflexionselemente 5 im Abbild der Kamera 3 und die darauf basierende Probenmaterialcharakterisierung geschieht dann wie folgt: Die Polarisationskamera 3 ist zur Trennung zweier orthogonaler Polarisationsanteile ausgebildet, nämlich des parallel zur Einfallsebene der Reflexionselemente 5 (Ebene parallel zur Förderbandoberfläche) einfallenden Polarisationsanteils des Lichts E und des senkrecht dazu einfallenden Polarisationsanteils. Handelt es sich bei einem abgebildeten Probenelement P um ein Element aus Zirkon, so wird, da hier die Brewsterbedingung erfüllt ist, lediglich parallel zur vorstehend beschriebenen Ebene polarisiertes Licht reflektiert. Lediglich dieser Polarisationsanteil ist somit für Zirkon-Probenelemente P mit einem Kanal der Kamera 3 nachweisbar, während der andere Kanal der Kamera 3 (der zum Nachweis von senkrecht dazu polarisiertem Licht ausgebildet ist) kein reflektiertes Licht nachweisen kann. Handelt es sich bei dem betrachteten Probenelement P um ein Element aus einem anderen Material als Zirkon, so wird durch die Polarisationskamera 3 Licht beider Polarisationsanteile nachgewiesen (d.h. beide Kanäle der Kamera schlagen an). Bildet man somit das Verhältnis der Intensitäten der beiden Polarisationsanteile in den beiden Kanälen bzw. durch die Polarisationskamera 3 aufgenommenen Abbildern des Probenraumabschnitts 1 für all diejenigen Oberflächenelemente, die Reflexionselemente 5 sind, so variiert dieses Verhältnis signifikant für Reflexionselemente von Zirkonoberflächen und für Reflexionselemente von Oberflächen anderer Materialien. Durch geeignete Schwellwertsetzung können somit Zirkon-Probenelemente von anderen Probenelementen unterschieden werden.

Wird beispielsweise parallel zur Einfallsebene polarisiertes Licht durch die Polarisationskamera blau dargestellt und senkrecht dazu polarisiertes Licht rot, so bedeutet dies, dass in den durch die Polarisationskamera aufgenommenen und überlagerten Bildern die Reflexionselemente von Zirkon-Probenelementen P rein blau erscheinen.

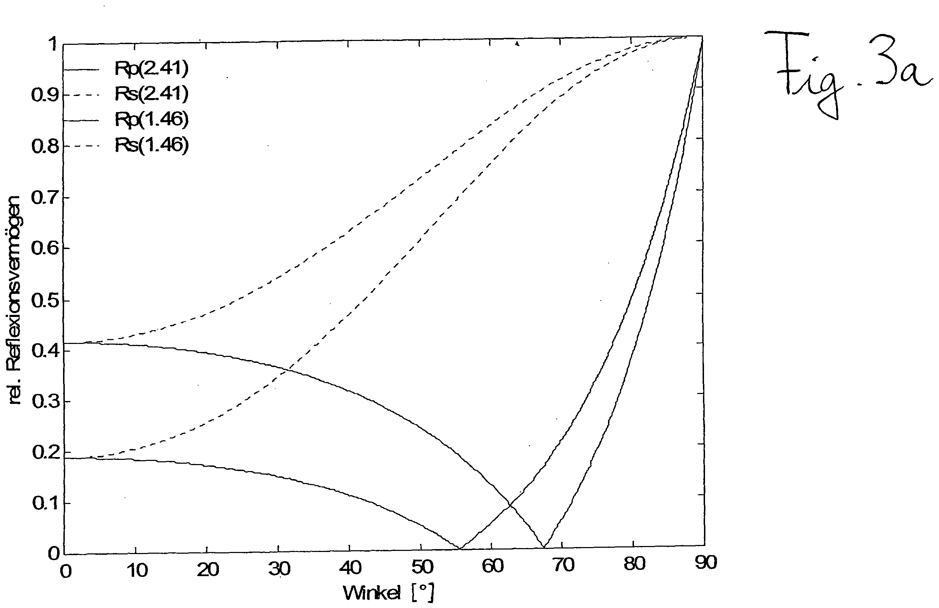

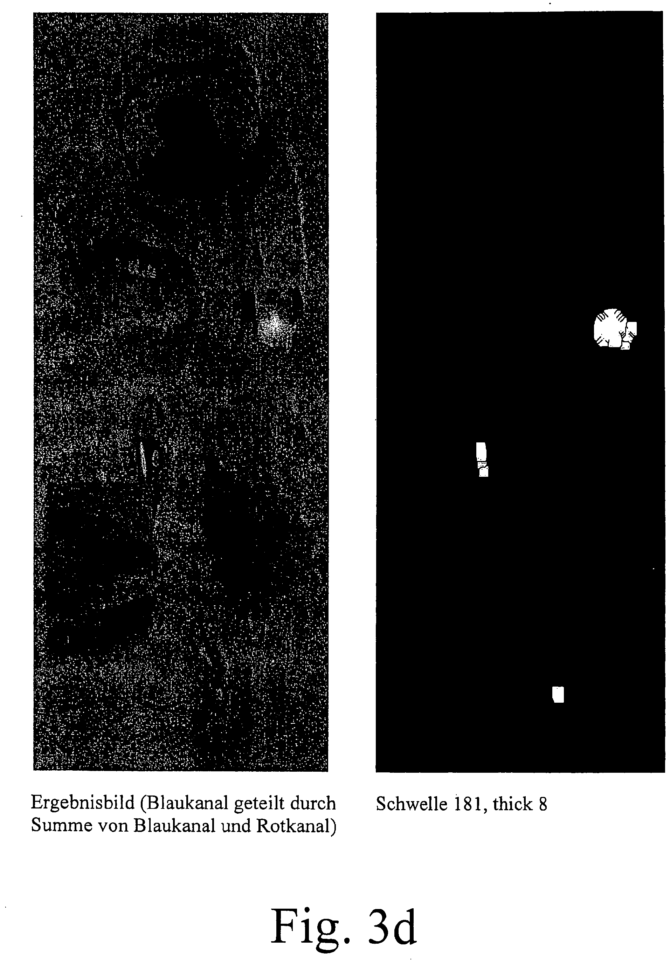

Figuren 3a bis 3d zeigen Beispiele für die Differenzierung von Diamant und Quarzglas (Fig. 3a. bis 3c) und von Zirkonkristallen in einem Schüttgutstrom P von solchen Kristallen, von Glasscherben und von Metallringen (Fig. 3d). Der Polarisator 23 wurde für Fig. 3d so justiert, dass die Förderbandoberfläche (Hintergrund) beide Polarisationsrichtungen mit gleichen Intensitäten in Richtung Polarisationskamera 3 reflektiert. $\theta_B$ beträgt dabei 63° (Brewster-Winkel für Zirkon). Auch wenn die durch den Probenraumabschnitt 1 beförderten Probenelemente P eine unregelmäßige Geometrie aufweisen und ihre genaue Lage unbekannt ist, so ist dennoch eine Objektcharakterisierung möglich, da die einzelnen Probenelemente differenzierbare Oberflächen aufweisen, d.h. jeder Schüttgutpartikel hat mindestens ein Oberflächenelement, das die Reflexionsbedingung (Einfallswinkel = $\theta_B$) erfüllt. Da die Reflexion sehr viel stärkere Signale liefert als die Streuung, können diese Flächenelemente identifiziert werden. Die zugrunde liegenden physikalischen Prinzipien dieser Reflektometrie (Reflexion von polarisiertem Licht am Medium, Fresnelsche Formeln für senkrechte und für parallele Polarisation sowie das Brechungsgesetz) sind dem Fachmann bekannt.

Figur 3a zeigt, wie aus den Fresnelschen Formeln durch Berechnung von Kurven für das relative Reflexionsvermögen zweier unterschiedlicher Stoffe ein Sortierkriterium entwickelt werden kann: Figur 3a zeigt das Reflexionsvermögen abhängig vom Einfallswinkel für die Stoffe Quartz (Brechungsindex = 1.46) und Diamant (Brechungsindex = 2.41), also für das Beispiel, das ein Unterscheiden von Diamant von Quartzglas gewünscht ist. Die Figur zeigt deutlich die unterschiedlichen Brewsterwinkel für die beiden Materialien; zur Trennung beider Stoffe kann somit eine Anordnung unter dem Brewsterwinkel $\theta_B$ des gesuchten Stoffes (also z.B. für Diamant unter $\theta_B = 67,5°$) erfolgen. Es sind dann diejenigen Reflexionselemente 5 zu ermitteln, bei denen nach der Reflexion lediglich ein Polarisationsanteil verbleibt. $R_s$ ist das Reflexionsvermögen für senkrecht zur Einfallsebene polarisiertes Licht und Rp ist das Reflexionsvermögen für parallele zur Einfallsebene polarisiertes Licht.

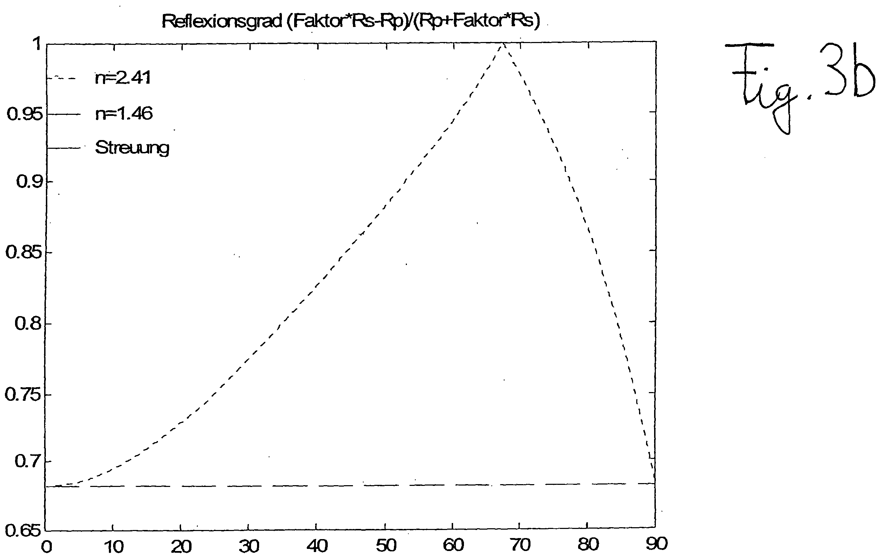

Eine Steigerung der Empfindlichkeit zur Trennung der beiden Stoffe kann durch eine Anpassung der Beleuchtung erfolgen. Beispielsweise kann in einer Anordnung zum Differenzieren von Zirkon ($\theta_B = 63°$) die Beleuchtung mittels des Polarisators 23 so eingestellt werden, dass für den Störstoff (beispielsweise Glas oder Metall) die beiden reflektierten Intensitäten gleich sind. Diese Einstellung kann mittels des Polarisators 23 so erfolgen, dann eine Störstoffprobe in das Messfeld gebracht wird und anschließend die Stellung des Polarisators so verändert wird, bis beide Intensitäten gleich sind. Figur 3b zeigt erneut für das Beispiel Diamant/Quartzglas den Reflexionsgrad, ebenfalls (vgl. Fig. 3a) abhängig vom Einfallswinkel $\theta$.

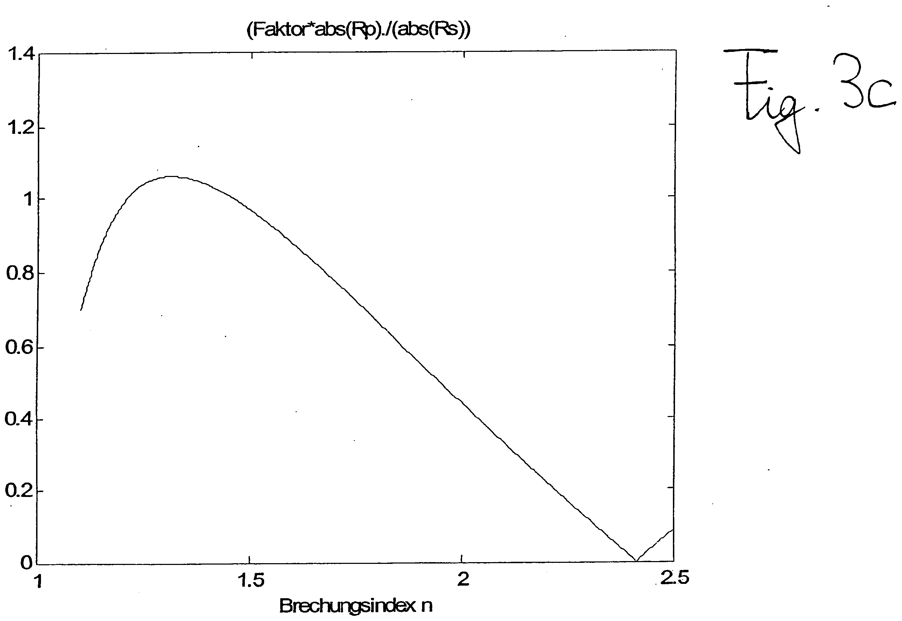

Bei einer Anordnung, in der als Einfallswinkel der Brewster-Winkel $\theta_B$ von Diamant gewählt wird, ergibt sich für die optische Unterscheidung von Diamant und von Stoffen mit einem abweichenden Brechungsindex (z.B. Quarzglas) schließlich die in Figur 3c gezeigte Kennlinie. Für das gezeigte Beispiel wurde die Polarisation der Beleuchtung so eingestellt, dass nicht reflektierende, sondern streuende Partikel bzw. Oberflächenelemente mit $R_p = R_s$ einen Quotienten von 5 haben. Es ergibt sich somit ein Sortierkriterium, das in weitem Bereich monoton mit dem Brechungsindex n fällt.

Bei der Einstellung des Systems zur Identifikation von Zirkon ist das Verhältnis zwischen blauem und rotem Kanal dann auf den parallel zur Förderbandoberfläche ausgerichteten, die Reflexionsbedingung erfüllenden Oberflächenelementen 5 der Zirkonkristalle am höchsten. Das Verhältnis kann somit dazu verwendet werden, in den einzelnen Probenelementen des Schüttgutstroms die Zirkonkristalle zu identifizieren.

Figur 3d zeigt ein entsprechendes Ergebnis, bei dem zur Bildung des Verhältnisses der Blaukanal B durch die Summe beider Kanäle R + B (R = Rotkanalintensität) geteilt wurde. Nach Schwellwertsetzung (Figur 3d rechts) lässt sich gut erkennen, dass im Bild 3 Zirkonkristalle markiert werden. Die Glasscherben (weitere unregelmäßige Elemente in Fig. 3d links) und ein im Schüttgutstrom vorhandener Metallring (Fig. 3d links oben) bleiben dunkel, werden also nicht identifiziert.

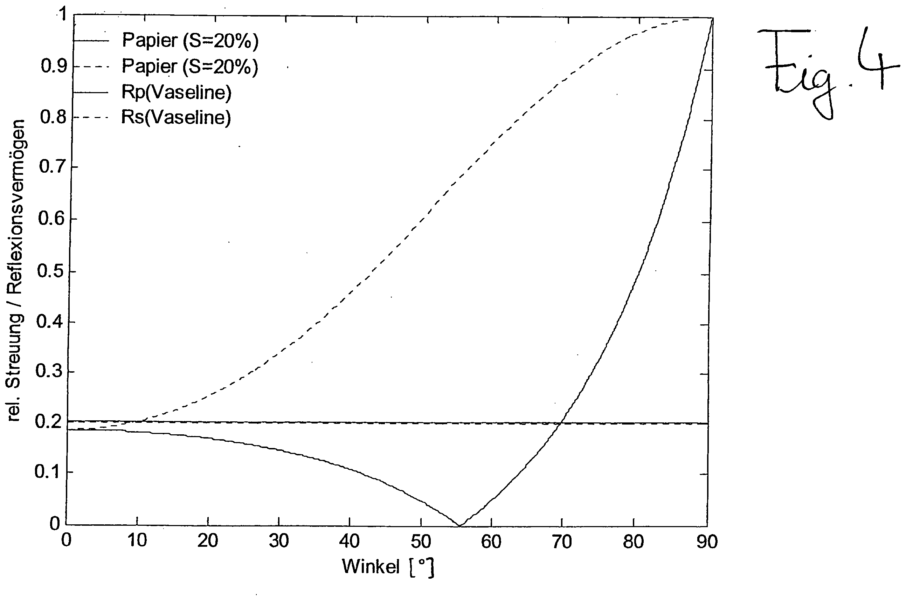

Figur 4 skizziert eine weitere Prüfaufgabe, die mit der in Figur 1 gezeigten Vorrichtung gelöst werden kann: Papier/Gaze wird in der Produktion mit Vaseline beschichtet. Gesucht wird ein Prüfsystem, das die vollständige Beschichtung während der Produktion automatisch überprüft. Auch hier basiert der Lösungsansatz gemäß Fig. 1 auf der Reflektometrie, wobei die hier ebene schichtförmige Probe P unter dem Brewster-Winkel $\theta_B$ von 55,5° für Vaseline angeordnet wird. Die aus den Fresnelschen Formeln berechneten Kurven für das Reflexionsvermögen von Vaseline zeigt Fig. 4. Zum Vergleich ist der erwartete Verlauf eines homogen mit 20% streuenden Papiers aufgetragen. Auch hier kann die Trennung der beiden genannten Stoffe wieder durch Auswertung der beiden Kanäle der Polarisationskamera 3 (Test auf $R_s = 0$, d.h. auf Vorhandensein lediglich parallel zur Grenzfläche polarisierten reflektierten Lichts) durchgeführt werden. Ergebnis der Prüfung ist die Aussage, ob Papier mit Vaseline beschichtet ist oder nicht. Mit Vaseline beschichtete Papierflächen zeichnen sich somit durch eine intensiv blaue Farbe aus, es spricht lediglich der blaue Kanal der Polarisationskamera 3 an. Der Polarisationsgrad der abgebildeten Flächenelemente kann somit aus den Intensitäten B des blauen Kanals und den Intensitäten R des roten Kanals wie folgt berechnet werden: B/(B+R). Vaseline-beschichtete Flächenanteile ergeben somit den Wert B/(B+R)=1. Zur Produktionskontrolle kann beispielsweise der beschichtete Flächenanteil am Gesamtflächenanteil ausgewertet werden.

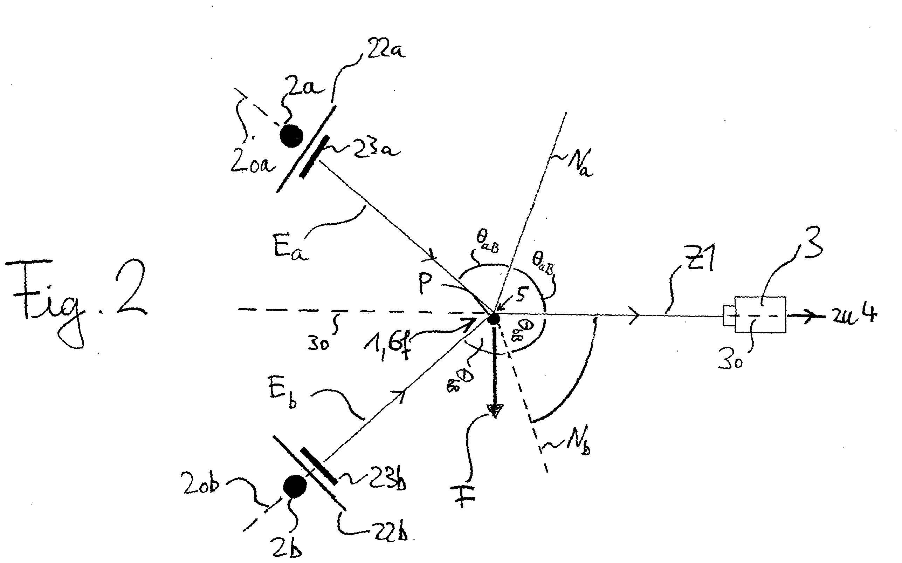

Figur 2 zeigt eine weitere Vorrichtung, bei der als Beleuchtungseinheit 2 mehrere einzelne Beleuchtungselemente 2a, 2b in Form von monochromatischen Lichtquellen mit Emissionswellenlängen von jeweils $\lambda = 550$ nm eingesetzt werden. In Einfallsrichtung gesehen sind hinter jedem Beleuchtungselement 2a, 2b ähnlich wie in Fig. 1 gezeigt, ein Diffusor 22a, 22b und ein Polarisator 23a, 23b angeordnet. Die Detektionseinheit 3 und die Auswerteeinheit 4 (hier nicht gezeigt) sind ähnlich wie im in Figur 1 beschriebenen Fall ausgebildet (Unterschiede s.u.). Die gezeigte Vorrichtung ist als Schüttgutsortiervorrichtung ausgebildet, bei dem das Schüttgut (von dem hier lediglich ein einziges Probenelement P gezeigt ist) einen Probenraumabschnitt 1 in Form eines freien Fallstreckenstücks 6f unterhalb eines Rüttlers (nicht gezeigt) durchquert. Die optische Achse 3o der Polarisationskamera 3 liegt hier in einer horizontalen Ebene senkrecht zur Fallrichtung F der Probenelemente P. In jedem der beidseits dieser horizontalen Ebene ausgebildeten Halbräume ist jeweils ein Beleuchtungselement 2a, 2b (zusammen mit zugehörigem Diffusor 22a, 22b und Polarisator 23a, 23b) angeordnet. Der Winkel zwischen den beiden optischen Achsen 2oa und 2ob der beiden Beleuchtungselemente 2a, 2b und der vorstehend beschriebenen horizontalen Ebene ist jeweils derselbe, die Beleuchtungselemente 2a, 2b und die Kamera 3 sind dabei so angeordnet, dass ihre optischen Achsen 2oa, 2ob und 3o in einer Ebene senkrecht zur vorstehend beschriebenen Horizontalebene liegen.

Aufgrund dieser Anordnung ist somit die Reflexionsbedingung für die beiden Beleuchtungselemente jeweils dieselbe: Die Winkelhalbierende $N_a$ trennt den von den beiden optischen Achsen 2oa und 3o bzw. den von der Einfallsrichtung $E_a$ des oberen Beleuchtungselements 2a und der Reflexionsrichtung Z1 aufgespannten Winkel in zwei gleichgroße Winkel $\theta_{aB}$, die entsprechend des Brewster-Winkels $\theta_B$ eines im Probenstrom P zu identifizierenden Materials ausgebildet werden. Ebenso trennt die Winkelhalbierende $N_b$ den durch die optische Achse 2ob des unteren Beleuchtungselements 2b (also das einfallende Licht $E_b$) und die optische Achse 3o der Polarisationskamera 3 (bzw. den entsprechenden reflektierten abgebildeten Lichtanteil Z1) aufgespannten Winkel in zwei gleichgroße Winkelabschnitte $\theta_{bB}$. Aufgrund der vorbeschriebenen Anordnung gilt hier $\theta_{aB} = \theta_{bB}$. Beide Beleuchtungselemente 2a und 2b sind somit auf ein und denselben Winkel, den Brewster-Winkel des zu identifizierenden Materials eingestellt.

Die Identifikation der Reflexionselemente 5 und die sich daran anschließende Auswertung der Polarisationsanteile für diese Reflexionselemente zur optischen Charakterisierung der Probenelemente P erfolgt nun analog zum für Fig. 1 beschriebenen Fall. Allerdings ist die Reflexionsbedingung für das aus der Beleuchtungseinheit 2a und der Kamera 3 bestehende Teilsystem zu einem anderen, späteren Zeitpunkt erfüllt, als für das weitere, aus dem Beleuchtungselement 2b und der Kamera 3 bestehende Teilsystem: Durchfällt ein Probenelement P die gezeigte Fallstrecke F, so erfüllen an seiner Rückseite (im Bild: oben liegende Seite) liegende Oberflächenelemente die Reflexionsbedingung, sind also Reflexionselemente 5, wenn das betrachtete Probenelement P gerade mit seiner Rückseite auf Höhe der Horizontalebene der optischen Achse 3o angeordnet ist, diese Horizontalebene also gerade Tangentialebene an die Rückseite des Probenelements P ist. Für das System 2b, 3 ist die Reflexionsbedingung demgegenüber bereits zu einem vor diesem Zeitpunkt liegenden Zeitpunkt erfüllt, nämlich wenn die Vorderseite des fallenden Probenelements P (im Bild unten liegende Seite) gerade von oben an die Horizontalebene der optischen Achse 3o stößt, diese Horizontalebene also tangential an die Vorderseite des Probenelements P anliegt.

Die signifikanten, potentiell als Reflexionselemente 5 in Frage kommenden Oberflächenelemente der Probe P müssen somit in den durch die Kamera 3o laufend aufgenommenen Abbildern zunächst an der Vorderseite und dann an der Rückseite des abgebildeten Objekts (das wieder durch z.B. gradientenbasierte Bildverarbeitungsmechanismen anhand seines Umrisses identifiziert werden kann) liegen. Insofern unterscheiden sich die Bedingungen zur Identifikation der Reflexionselemente 5 von denen des in Fig. 1 gezeigten Systems, bei dem die Reflexionselemente 5 etwa in der Mitte der Abbilder der einzelnen identifizierten Probenelemente liegen müssen. Abgesehen von den vorbeschriebenen Unterschieden bei der Identifikation der Reflexionselemente 5 kann jedoch die Auswertung der unterschiedlichen Polarisationsanteile für die identifizierten Reflexionselemente zur optischen Charakterisierung der Probe P ganz analog wie im für Fig. 1 beschriebenen Fall erfolgen.

Analog zum in Fig. 2 gezeigten Fall kann auch eine Beleuchtungseinheit eingesetzt werden, die insgesamt statt zwei Beleuchtungselementen 2a, 2b vier Beleuchtungselemente umfasst, die in einer Ebene senkrecht zur optischen Achse 3o und äquidistant auf einem Kreis um diese optische Achse 3o herum (Winkelabstände der einzelnen Beleuchtungselemente 90°) angeordnet sind. Ähnlich wie im Fig. 2 gezeigten Fall erfolgt dann eine Beleuchtung so, dass Oberflächenelemente am Rand der Objekte P aus vier Himmelsrichtungen intensitätsbasiert darauf untersucht werden, ob sie passende Oberflächennormalen N aufweisen. Somit ist eine Charakterisierung der fallenden Probenelemente P des Schüttgutstroms mit bis zu vier Punkten möglich.

Für die Objekte in Fig. 2 kann somit geprüft werden, ob es Flächenelemente bzw. Punkte mit reiner Farbe, z.B. blau (vgl. Beschreibung zur Fig. 1: dann liegt lediglich einer der beiden Polarisationsanteile vor) gibt und ob sich diese Punkte auf der Vorder- oder Rückseite der jeweiligen Probenelemente P (bezogen auf die Bewegungsrichtung F) finden.

Bei entsprechender Einstellung auf den Brewster-Winkel und bei vier einzelnen Beleuchtungselementen im 90°-Abstand (nicht gezeigt), werden dann Objekte aus dem zu identifizierenden Material gemäß des Brewster-Winkels $\theta_{aB} = \theta_{bB}$ z.B. durch blaue Bildelemente zu einem zweiten, späteren Zeitpunkt (Abtastung der Vorderfront), rote Bildelemente zu einem ersten späteren Zeitpunkt (Abtastung der linken und der rechten Seite) und durch weitere blaue Bildelemente zu einem dritten, noch späteren Zeitpunkt (Abtastung der Rückfront) gekennzeichnet.

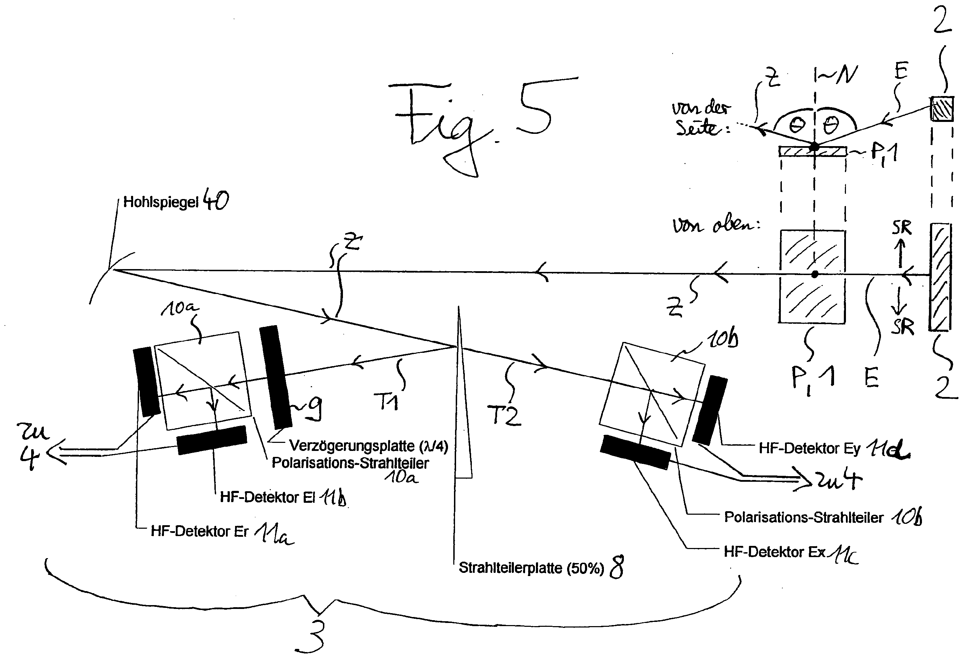

Figur 5 zeigt schließlich eine erfindungsgemäße Vorrichtung zur optischen Charakterisierung einer flachen, schichtförmigen Probe P in einem Probenraumabschnitt 1 auf Basis eines Laserscannersystems. Der den Probenraumabschnitt 1 in Richtung SR senkrecht zur Einfallsrichtung E des Lichts eindimensional abscannende Laser 2 als Beleuchtungseinheit strahlt Licht unter dem Einfallswinkel θ (Winkel zwischen der Probennormalen N und der Einfallsrichtung E des Laserlichts) auf die Probenoberfläche der Probe P ein. Vgl. hierzu Figur 5 rechts oben, die einen Schnitt senkrecht durch die bestrahlte Probenoberfläche zeigt und Figur 5 rechts Mitte, die eine Aufsicht auf die bestrahlte Probenoberfläche, also einen Blick in Richtung der Normalen N zeigt. Das unter dem entsprechenden Ausfallwinkel θ (Reflexionsgesetz) reflektierte Licht Z wird den in Figur 5 links und Mitte gezeigten Empfänger 3 zur Auswertung zugeleitet.

Die in Figur 5 gezeigte Vorrichtung basiert auf der Überlegung, dass der Emissionslaser 2 des gezeigten Scanners monochromatische, kohärente Strahlung emittiert, sodass die von der Probe empfangene Strahlung E bereits vollständig polarisiert ist. In diesem Fall genügt somit die Detektion von drei Stokesparametern aus den reflektierten Laserlichtanteilen Z zur vollständigen Charakterisierung des Polarisationszustands der reflektierten bzw. detektierten Lichtstrahlung Z.

Der gezeigte Empfänger 3 umfasst nun in Einstrahlrichtung des reflektierten Lichtanteils Z gesehen im Strahlengang nacheinander die folgenden Bauteile:

- Einen zum Fokussieren des an der Probenoberfläche P reflektierten Lichtanteils Z auf eine Strahlteilerplatte 8 ausgebildeten Hohlspiegel 40.
- Die polarisationserhaltende Strahlteilerplatte 8, mit der jeweils 50% der einfallenden, reflektierten Strahlung Z in einen ersten Teilstrahlengang T1 und in einen zweiten Teilstrahlengang T2 aufgeteilt wird.
- Im ersten Teilstrahlengang T1: zunächst eine Verzögerungsplatte (λ/4-Platte) 9, die das Licht des ersten Teilstrahlengang T1 auf einen ersten Polarisations-Strahlteiler 10a lenkt, der zur Unterscheidung zweier zueinander orthogonaler Polarisationsanteile des einfallenden Lichts ausgebildet ist. Der erste dieser beiden Polarisationsanteile wird mit einem ersten Empfangselement 11a nachgewiesen, der andere dieser beiden Polarisationsanteile mit einem weiteren Empfangselement 11b (Intensitätsdetektoren).
- Der zweite Teilstrahlengang T2 ist grundsätzlich ebenso wie der erste Teilstrahlengang T1 aufgebaut, hier ist allerdings die Verzögerungsplatte 9 weggelassen, sodass in diesem Teilstrahlengang lediglich ein zweiter Polarisations-Strahlteiler 10b und zwei weitere Empfangselemente 11c und 11d angeordnet sind, mit denen die beiden zueinander orthogonalen Polarisationsanteile im zweiten Teilstrahlengang T2 nachweisbar sind.
- Die vier Empfangselemente 11a bis 11d sind dann jeweils über birektionale Signalleitungen mit einer Auswerteeinheit 4 verbunden (nicht gezeigt).

Mit dem gezeigten Empfänger 3 kann somit der Polarisationszustand der reflektierten Strahlung Z vollständig wie folgt charakterisiert werden:

Mithilfe der Empfangselemente 11c und 11d des Teilstrahlengangs T2 werden die Intensitäten $I_0$ und $I_{90}$ für zwei lineare, zueinander orthogonale Polarisationsanteile bestimmt. Die Kombination der Verzögerungsplatte 9 und des Teilers 10a ergibt einen Strahlteiler zur Aufspaltung des einfallenden Lichts in rechtszirkular und linkzirkuar polarisiertes Licht. (Intensitäten $I_{RZ}$ und $I_{LZ}$ für rechtszirkular und für linkszirkular polarisiertes Licht). Somit können vier unterschiedliche Polarisationsanteile bestimmt werden.

Die vier gesuchten Stokesparameter I, S, U und V lassen sich somit aus den mit den Empfangselementen 11a bis 11d nachgewiesenen, also den zueinander orthogonalen linearen Polarisationsanteilen (Intensitäten $I_0$ und $I_{90}$) und den zirkularen Polarisationsanteilen (rechtszirkular polarisierter Anteil mit der Intensität $I_{RZ}$ und linkszirkular polarisierter Anteil mit der Intensität $I_{LZ}$) wie folgt bestimmen

$$I = I_0 + I_{90}$$

$$S = I_0 - I_{90}$$

$$V = I_{RZ} - I_{LZ},$$

wobei dann mit der Nebenbedingung für monochromatische kohärente Laserstrahlung von

$$S + U + V = 1$$

der vierte Stokesparameter $U = I_{45} - I_{135}$ berechnet werden kann.

Die gezeigte Vorrichtung zur optischen Charakterisierung aus Figur 5 ermöglicht somit die Berechnung des vollständigen Polarisationszustandes des reflektierten Lichtanteils Z aus den empfangenen Signalintensitäten der vier Empfangselemente 11a bis 11d. Da der Polarisationszustand des reflektierten Lichts Z von dem jeweils untersuchten Probenmaterial der Probe P abhängt, lässt sich die in Figur 5 gezeigte Vorrichtung zur Materialcharakterisierung der Probe P verwenden.

Werden Empfängerstrahlengang und Senderstrahlengang im gleichen Gehäuse realisiert (integrierte Sende- und Empfangseinheit) kann eine entsprechende Charakterisierung des Materials erfolgen, sofern das an der Probe (spiegelnd) reflektierte Licht auf einen Retroreflektor trifft, der die Strahlen in sich zurück zur kombinierten Sende- Empfangseinheit reflektiert. Im Unterschied zu der Anordnung mit getrenntem Sender und Empfänger wird das Licht jedoch zweifach an der Probe reflektiert. Die Polarisationseffekte an der Probe gehen damit quadratisch in die empfangenen Intensitäten ein.

**Patentansprüche**

1. Vorrichtung zur optischen Charakterisierung einer Probe (P) mit
einem Laserscannersystem mit einem Laser (2), der so ausgerichtet ist, dass er einen Probenraumabschnitt (1), in den die Probe (P) eingebracht ist, ein- oder zweidimensional abscannt (SR) und der polarisiertes Laserlicht emittiert,

einem Empfänger (3) zum Empfang des von der in den Probenraumabschnitt (1) eingebrachten Probe (P) zurückgeworfenen Lichts (Z),
wobei der Empfänger (3) umfasst:

• einen für das von der Probe (P) zurückgeworfene Licht (Z) polarisationserhaltenden Strahlteiler (8) zum Teilen des auf den Empfänger auftreffenden Laserlichts in einen ersten (T1) und einen zweiten (T2) Teilstrahlengang,
• jeweils im ersten und im zweiten Teilstrahlengang (T1, T2): ein polarisierendes optisches Element (10a, 10b), mit dem das Licht des jeweiligen Teilstrahlengangs (T1, T2) in zwei unterschiedliche Polarisationsanteile zerlegbar ist, wobei im Strahlengang jedes der beiden so getrennten Polarisationsanteile jeweils ein Empfangselement (11a, 11b, 11c, 11d) zum Nachweis von Licht des jeweiligen Polarisationsanteils angeordnet ist, und
• lediglich in einem (T1) der beiden Teilstrahlengänge (T1, T2) nach dem Strahlteiler (8) und vor dem polarisierenden optischen Element (10a) ein Polarisations-Änderungselement (9), mit dem die Polarisation des Lichts dieses Teilstrahlengangs (T1) veränderbar ist, und
einer Auswerteeinheit (4), mit der auf Grundlage der von den Empfangselementen (11a, 11b, 11c, 11d) des Empfängers (3) nachgewiesenen unterschiedlichen Polarisationsanteile der Polarisationszustand des von der Probe (P) zurückgeworfenen Lichts (Z) bestimmbar ist zu deren optischer Charakterisierung,
**dadurch gekennzeichnet, dass**
der Laser (2) und der Empfänger (3) als kombinierte Sende- und Empfangseinheit umfassend einen weiteren Strahlteiler ausgebildet sind und dass die Vorrichtung einen polarisationserhaltenden Retroreflektor wie folgt umfasst:

Der Laser (2), der Empfänger (3) und der Retroreflektor sind so angeordnet und ausgerichtet,

• dass die in den Probenraumabschnitt (1) eingebrachte Probe (P) mit dem Laser beleuchtbar ist, und
• dass an der Probe (P) gestreutes, diffus reflektiertes, spiegelnd reflektiertes oder transmittiertes Laserlicht an dem Retroreflektor so in sich zurückreflektierbar ist, dass das in sich zurückreflektierte Laserlicht über die Probe (P) in die kombinierte Sende- und Empfangseinheit und dort, über den weiteren Strahlteiler, in einen Empfängerstrahlengang gelangt, zum dortigen Aufteilen auf den ersten (T1) und den zweiten (T2) Teilstrahlengang des Empfängers (3).

**2.** Vorrichtung nach dem vorhergehenden Anspruch, *dadurch gekennzeichnet, dass*

der Strahlteiler (8), die polarisierenden optischen Elemente (10a, 10b), das Polarisations-Änderungselement (9) und die Empfangselemente (11a, 11b, 11c, 11d) angeordnet sind zum Bestimmen von drei von vier Stokesparametern des zurückgeworfenen Lichts (Z) aus den nachgewiesenen unterschiedlichen Polarisationsanteilen und

dass der Polarisationszustand des von der Probe (P) zurückgeworfenen Lichts (Z) aus den drei so bestimmten Stokesparametern unter Heranziehen einer Nebenbedingung für kohärentes Licht berechenbar ist.

**3.** Vorrichtung nach einem der vorhergehenden Ansprüche, *dadurch gekennzeichnet, dass*

das polarisierende optische Element (10a, 10b) ein polarisierendes Prisma oder ein weiterer, polarisierender Strahlteiler ist und/oder

dass das Polarisations-Änderungselement (9) eine als λ/4-Platte ausgebildete Verzögerungsplatte ist.

**4.** Verfahren zur optischen Charakterisierung einer Probe (P),

wobei mit einem Laser (2) eines Laserscannersystems polarisiertes Laserlicht emittiert wird und die Probe (P), die in einen Probenraumabschnitt (1) eingebracht worden ist, ein- oder zweidimensional abgescannt (SR) wird und

wobei ein Empfänger (3) zum Empfang des von der in den Probenraumabschnitt (1) eingebrachten Probe (P) zurückgeworfenen Lichts (Z) ausgerichtet wird,

wobei der Empfänger (3) umfasst:

• einen für das von der Probe (P) zurückgeworfene Licht (Z) polarisationserhaltenden Strahlteiler (8) zum Teilen des auf den Empfänger auftreffenden Laserlichts in einen ersten (T1) und einen zweiten (T2) Teilstrahlengang,
• jeweils im ersten und im zweiten Teilstrahlengang (T1, T2): ein polarisierendes optisches Element (10a, 10b), mit dem das Licht des jeweiligen Teilstrahlengangs (T1, T2) in zwei unterschiedliche Polarisationsanteile zerlegt wird, wobei im Strahlengang jedes der beiden so getrennten Polarisationsanteile jeweils ein Empfangselement (11a, 11b, 11c, 11d) zum Nachweis von Licht des jeweiligen Polarisationsanteils angeordnet wird, und
• lediglich in einem (T1) der beiden Teilstrahlengänge (T1, T2) nach dem Strahlteiler (8) und vor dem polarisierenden optischen Element (10a) ein Polarisations-Änderungselement (9), mit dem die Polarisation des Lichts dieses Teilstrahlengangs (T1) verändert wird, und wobei mit einer Auswerteeinheit (4) auf Grundlage der von den Empfangselementen (11a, 11b, 11c, 11d) des Empfängers (3) nachgewiesenen unterschiedlichen Polarisationsanteile der Polarisationszustand des von der Probe (P) zurückgeworfenen Lichts (Z) bestimmt wird zu deren optischer Charakterisierung,

*dadurch gekennzeichnet, dass*

der Laser (2) und der Empfänger (3) als kombinierte Sende- und Empfangseinheit umfassend einen weiteren Strahlteiler ausgebildet werden und dass ein polarisationserhaltender Retroreflektor wie folgt vorgesehen wird:

Der Laser (2), der Empfänger (3) und der Retroreflektor werden so angeordnet und ausgerichtet,

• dass die in den Probenraumabschnitt (1) eingebrachte Probe (P) mit dem Laser beleuchtet wird, und
• dass an der Probe (P) gestreutes, diffus reflektiertes, spiegelnd reflektiertes oder transmittiertes Laserlicht an dem Retroreflektor so in sich zurückreflektiert wird, dass das in sich zurückreflektierte Laserlicht über die Probe (P) in die kombinierte Sende- und Empfangseinheit und dort, über den weiteren Strahlteiler, in einen Empfängerstrahlengang gelangt, zum dortigen Aufteilen auf den ersten (T1) und den zweiten (T2) Teilstrahlengang des Empfängers (3).

**Claims**

**1.** A device for optical characterisation of a sample (P), with

a laser scanner system with a laser (2) which is oriented such that it one- or two-dimensionally scans (SR) a sample spatial portion (1) into which the sample (P) is introduced, and which emits polarised laser light,

a receiver (3) for receiving the light (Z) reflected by the sample (P) introduced into the sample spatial portion (1),

wherein the receiver (3) comprises:

• a polarisation-maintaining beam splitter (8) for the light (Z) reflected by the sample (P) for dividing the laser light incident on the receiver into a first (T1) and a second (T2) partial beam path,
• in each case in the first and in the second partial beam path (T1, T2): a polarising optical element (10a, 10b) with which the light of the respective partial beam path (T1, T2) can be split into two different polarisation fractions, wherein in each case a receiving element (11a, 11b, 11c, 11d) for detecting light of the respective polarisation fraction is arranged in the beam path of each of the two polarisation fractions thus separated, and

• merely in one (T1) of the two partial beam paths (T1, T2) after the beam splitter (8) and before the polarising optical element (10a), a polarisation-changing element (9) with which the polarisation of the light of this partial beam path (T1) can be changed, and

an evaluation unit (4) with which, on the basis of the different polarisation fractions detected by the receiving elements (11a, 11b, 11c, 11d) of the receiver (3), the polarisation state of the light (Z) reflected by the sample (P) can be determined for the optical characterisation thereof, **characterised in that** the laser (2) and the receiver (3) are designed as a combined transmitting and receiving unit comprising a further beam splitter, and **in that** the device comprises a polarisation-maintaining retroreflector as follows:

the laser (2), the receiver (3) and the retroreflector are arranged and oriented such

• that the sample (P) introduced into the sample spatial portion (1) can be illuminated with the laser, and
• that laser light scattered, diffusely reflected, specularly reflected or transmitted on the sample (P) can be reflected back in itself on the retroreflector such that the laser light reflected back in itself passes via the sample (P) into the combined transmitting and receiving unit and there, via the further beam splitter, passes into a receiver beam path for splitting there into the first (T1) and the second (T2) partial beam path of the receiver (3).

2. A device according to the preceding claim, **characterised in that** the beam splitter (8), the polarising optical elements (10a, 10b), the polarisation-changing element (9) and the receiving elements (11a, 11b, 11c, 11d) are arranged to determine three of four Stokes' parameters of the reflected light (Z) from the detected different polarisation fractions, and **in that** the polarisation state of the light (Z) reflected by the sample (P) can be calculated from the three Stokes' parameters thus determined using a secondary condition for coherent light.

3. A device according to one of the preceding claims, **characterised in that** the polarising optical element (10a, 10b) is a polarising prism or a further, polarising beam splitter and/or
**in that** the polarisation-changing element (9) is a waveplate formed as a $\lambda/4$ plate.

4. A method for optical characterisation of a sample (P), wherein polarised laser light is emitted with a laser (2) of a laser scanner system and the sample (P), which has been introduced into a sample spatial portion (1), is scanned (SR) one- or two-dimensionally, and
wherein a receiver (3) is oriented for receiving the light (Z) reflected by the sample (P) introduced into the sample spatial portion (1),
wherein the receiver (3) comprises:

• a polarisation-maintaining beam splitter (8) for the light (Z) reflected by the sample (P) for dividing the laser light incident on the receiver into a first (T1) and a second (T2) partial beam path,
• in each case in the first and in the second partial beam path (T1, T2): a polarising optical element (10a, 10b) with which the light of the respective partial beam path (T1, T2) is split into two different polarisation fractions, wherein in each case a receiving element (11a, 11b, 11c, 11d) for detecting light of the respective polarisation fraction is arranged in the beam path of each of the two polarisation fractions thus separated, and
• merely in one (T1) of the two partial beam paths (T1, T2) after the beam splitter (8) and before the polarising optical element (10a), a polarisation-changing element (9) with which the polarisation of the light of this partial beam path (T1) is changed, and

wherein, on the basis of the different polarisation fractions detected by the receiving elements (11 a, 11b, 11c, 11d) of the receiver (3), the polarisation state of the light (Z) reflected by the sample (P) is determined with an evaluation unit (4) for the optical characterisation thereof, **characterised in that** the laser (2) and the receiver (3) are designed as a combined transmitting and receiving unit comprising a further beam splitter, and **in that** a polarisation-maintaining retroreflector is provided as follows:

the laser (2), the receiver (3) and the retroreflector are arranged and oriented such

• that the sample (P) introduced into the sample spatial portion (1) is illuminated with the laser, and
• that laser light scattered, diffusely reflected, specularly reflected or transmitted on the sample (P) is reflected back in itself on the retroreflector such that the laser light reflected back in itself passes via the sample (P) into the combined transmitting and receiving unit and there, via the further beam splitter, passes into a receiver beam path for splitting there into the first (T1) and the second (T2) partial beam path of the receiver (3).

**Revendications**

1. Dispositif pour la caractérisation optique d'un échantillon (P), avec
un système de balayage laser avec un laser (2), qui est orienté de façon à balayer une portion de chambre à échantillon (1), dans laquelle l'échantillon (P) est inséré, de manière monodimensionnelle ou bidimensionnelle (SR) et qui émet une lumière laser polarisée,
un récepteur (3) pour la réception de la lumière (Z) réfléchie par l'échantillon (P) inséré dans la portion de chambre à échantillon (1),
le récepteur (3) comprenant :

    • un diviseur de faisceau (8) générant la polarisation pour la lumière (Z) réfléchie par l'échantillon (P), pour la division de la lumière laser arrivant sur le récepteur en un premier trajet de faisceau partiel (T1) et un deuxième trajet de faisceau partiel (T2),
    • dans le premier et dans le deuxième trajets de faisceaux (T1, T2) : un élément optique polarisant (10a, 10b), avec lequel la lumière du trajet de faisceau partiel (T1, T2) peut être décomposée en deux composantes de polarisation différentes, moyennant quoi, dans le trajet de faisceau de chacune des deux composantes de polarisation ainsi séparées, se trouve un élément de réception (11 a, 11 b, 11 c, 11 d) pour la détection de la lumière de la composante de polarisation concernée et
    • uniquement dans un (T1) des deux trajets de faisceaux partiels (T1, T2), après le diviseur de faisceau (8) et avant l'élément optique polarisant (10a), un élément de modification de polarisation (9) avec lequel la polarisation de la lumière de ce trajet de faisceau partiel (T1) peut être modifiée et
une unité d'analyse (4) avec laquelle l'état de polarisation de la lumière (Z) réfléchie par l'échantillon (P) peut être déterminé sur la base des différentes composantes de polarisation détectée par les éléments de réception (11 a, 11 b, 11 c, 11 d) du récepteur (3), pour sa caractérisation optique,
**caractérisé en ce que**
le laser (2) et le récepteur (3) sont conçus sous la forme d'une unité d'émission et de réception combinée comprenant un diviseur de faisceau supplémentaire et **en ce que** le dispositif comprend un rétro-réflecteur pour la génération d'une polarisation, comme suit :

    le laser (2), le récepteur (3) et le rétro-réflecteur sont disposés et conçus

    • de façon à ce que l'échantillon (P) inséré dans la portion de chambre d'échantillon (1) puisse être éclairé avec le laser et
    • de façon à ce qu'une lumière laser diffusée, réfléchie de manière diffuse, réfléchie de manière spéculaire ou transmis au niveau de l'échantillon (P) puisse être réfléchie, de telle sorte que la lumière laser réfléchie arrive, par l'intermédiaire de l'échantillon (P), dans l'unité d'émission et de réception, et arrive, par l'intermédiaire du diviseur de faisceau supplémentaire, dans un trajet de faisceau de récepteur, pour y être divisé en un premier (T1) et en un deuxième (T2) trajets de faisceaux partiels du récepteur (3).

2. Dispositif selon la revendication précédente,
**caractérisé en ce que**
le diviseur de faisceau (8), les éléments optiques polarisants (10a, 10b), l'élément de modification de polarisation (9) et les éléments de réception (11 a, 11 b, 11 c, 11 d) sont disposés pour la détermination de trois parmi quatre paramètres de Stokes de la lumière réfléchie (Z) à partir des différentes composantes de polarisation détectées et
l'état de polarisation de la lumière (Z) réfléchie par l'échantillon (P) peut être calculé à partir des trois paramètres de Stokes ainsi déterminés à l'aide d'une contrainte pour une lumière cohérente.

3. Dispositif selon l'une des revendications précédentes,
**caractérisé en ce que**
l'élément optique polarisant (10a, 10b) est un prisme polarisant ou un diviseur de faisceau polarisant supplémentaire
et/ou
l'élément de modification de polarisation (9) est une lame à retard conçue comme une lame $\lambda/4$.

4. Procédé pour la caractérisation optique d'un échantillon (P),
moyennant quoi, avec un laser (2) d'un système de balayage laser, une lumière laser polarisée est émise et l'échantillon (P), qui a été inséré dans une portion de chambre à échantillon (1), est balayé de manière monodimensionnelle et bidimensionnelle (SR) et
un récepteur (3) étant conçu pour la réception de la lumière (Z) réfléchie par l'échantillon (P) inséré dans la portion de chambre à échantillon (1),

le récepteur (3) comprenant :

• un diviseur de faisceau (8) générant la polarisation pour la lumière (Z) réfléchie par l'échantillon (P), pour la division de la lumière laser arrivant sur le récepteur, en un premier (T1) et un deuxième (T2) trajets de faisceaux,

• dans le premier et dans le deuxième trajets de faisceaux (T1, T2) : un élément optique polarisant (10a, 10b), avec lequel la lumière du trajet de faisceau partiel (T1, T2) peut être décomposée en deux composantes de polarisation différentes, moyennant quoi, dans le trajet de faisceau de chacune des deux composantes de polarisation ainsi séparées, se trouve un élément de réception (11 a, 11 b, 11 c, 11 d) pour la détection de la lumière de la composante de polarisation concernée et

• uniquement dans un (T1) des deux trajets de faisceaux partiels (T1, T2), après le diviseur de faisceau (8) et avant l'élément optique polarisant (10a), un élément de modification de polarisation (9) avec lequel la polarisation de la lumière de ce trajet de faisceau partiel (T1) peut être modifiée et

avec une unité d'analyse (4), l'état de polarisation de la lumière (Z) réfléchie par l'échantillon (P) pouvant être déterminé sur la base des différentes composantes de polarisation détectée par les éléments de réception (11 a, 11 b, 11 c, 11 d) du récepteur (3), pour sa caractérisation optique,

**caractérisé en ce que**
le laser (2) et le récepteur (3) sont conçus sous la forme d'une unité d'émission et de réception combinée comprenant un diviseur de faisceau supplémentaire et **en ce qu'**un rétro-réflecteur pour la génération d'une polarisation est prévu, comme suit :

le laser (2), le récepteur (3) et le rétro-réflecteur sont disposés et conçus

• de façon à ce que l'échantillon (P) inséré dans la portion de chambre d'échantillon (1) puisse être éclairé avec le laser et

• de façon à ce qu'une lumière laser diffusée, réfléchie de manière diffuse, réfléchie de manière spéculaire ou transmise au niveau de l'échantillon (P) puisse être réfléchie, de telle sorte que la lumière laser réfléchie arrive, par l'intermédiaire de l'échantillon (P), dans l'unité d'émission et de réception, et arrive, par l'intermédiaire du diviseur de faisceau supplémentaire, dans un trajet de faisceau de récepteur, pour y être divisé en un premier (T1) et en un deuxième (T2) trajets de faisceaux partiels du récepteur (3).

Fig. 1

Fig. 2

EP 2 619 547 B1

Fig. 3a

EP 2 619 547 B1

Fig. 3b

(Faktor*abs(Rp)./(abs(Rs))

Brechungsindex n

Fig. 3c

EP 2 619 547 B1

Ergebnisbild (Blaukanal geteilt durch
Summe von Blaukanal und Rotkanal)

Schwelle 181, thick 8

# Fig. 3d

Fig. 4

Fig. 5

Hohlspiegel 40

Verzögerungsplatte (λ/4)
Polarisations-Strahlteiler 10a

HF-Detektor El 11b

HF-Detektor Er 11a

HF-Detektor Ey 11d

Polarisations-Strahlteiler 10b

HF-Detektor Ex 11c

Strahlteilerplatte (50%) 8

von der Seite:

von oben:

EP 2 619 547 B1

**IN DER BESCHREIBUNG AUFGEFÜHRTE DOKUMENTE**

**In der Beschreibung aufgeführte Patentdokumente**

- US 7768643 B1
- US 5311285 A
- EP 1619465 A1
- US 20040017561 A
- WO 2009049594 A

**In der Beschreibung aufgeführte Nicht-Patentliteratur**

- **THOMAS GEILER.** Polarisationsbildgebung in der industriellen Qualitätskontrolle. VDM Verlag, August 2008
- **H.G. TOMPKINS ; W.A. MCGAHAN.** Spectroscopic Ellipsometry and Reflectometry. Wiley Interscience, 1999
- **M. FAUPEL.** *Abbildende Ellipsometrie und ihre Anwendung,* 1996
- *Optische Messung technischer Oberflächen in der Praxis,* 2007